# FASCICULE DE BREVET EUROPEEN

(11) **EP 4 567 687 B1**
(45) Date de publication et mention de la délivrance du brevet: **08.07.2026**
(21) Numéro de dépôt: 23307148.9
(22) Date de dépôt: 06.12.2023
(51) Int. Cl.: G06N 20/00, G06N 3/044, G06N 3/0464, G06N 3/09

(54) **PROCÉDÉ, DISPOSITIF ET SYSTÈME INFORMATIQUE DE GESTION DE MODÈLES D'INTELLIGENCE ARTIFICIELLE POUR LA PRÉDICTION DE MESURES DE CAPTEURS**
VERFAHREN, VORRICHTUNG UND COMPUTERSYSTEM ZUR VERWALTUNG VON MODELLEN KÜNSTLICHER INTELLIGENZ ZUR VORHERSAGE VON SENSORMESSUNGEN
METHOD, DEVICE AND COMPUTER SYSTEM FOR MANAGING ARTIFICIAL INTELLIGENCE MODELS FOR PREDICTING SENSOR MEASUREMENTS

(43) Date de publication de la demande: 11.06.2025
(73) Titulaire: ATOS France, 95870 Bezons (FR)
(72) Inventeur: LECROART, Yannick, 34280 La Grande Motte (FR)
(74) Mandataire: Novagraaf Technologies

(56) Documents cités:
- EP-A1- 4 102 253
- FR-A1- 2 977 422

## Description

### DOMAINE TECHNIQUE

La présente invention concerne la gestion de modèles d'intelligence artificielle entraînés à prédire des mesures collectées par des capteurs dans un environnement de production.

En particulier, l'invention s'applique à une flotte de capteurs de données déployés dans un environnement réel et à l'affectation d'un modèle de prédiction donné à des groupes de capteurs d'un même type.

### ARRIERE PLAN TECHNOLOGIQUE

Le recours à l'Intelligence Artificielle (IA) dans l'Internet des Objets ou IoT (de l'anglais, « Internet of Things ») s'est généralisé. Il est en effet courant aujourd'hui d'entraîner un modèle d'IA à prédire l'évolution de mesures collectées par un capteur de données dans le temps, à partir de données de mesures collectées sur une période temporelle passée, puis de l'utiliser pour détecter à l'avance des dysfonctionnements d'un système industriel, par exemple d'un réseau de collecte des eaux usées et pluviales, et ainsi anticiper des pannes.

Or, la supervision d'un système industriel peut nécessiter le déploiement d'un grand nombre de capteurs de données de types variés. Par exemple, pour un réseau de collecte des eaux usées et pluviales, des milliers de capteurs de niveau d'eau, de température, de pression, de profondeur, etc. sont placés en différents points de ce réseau. Avec une telle flotte, on comprend qu'il n'est pas possible d'associer un modèle de prédiction à chaque capteur de données. Par conséquent, il est devenu crucial de généraliser les modèles d'IA, c'est-à-dire d'associer un même modèle d'IA à plusieurs capteurs de données, afin d'économiser des ressources de stockage, de puissance de calcul et de bande passante.

Néanmoins, la généralisation d'un modèle d'IA à une multitude de capteurs IoT est complexe en raison de plusieurs facteurs. Premièrement, chaque capteur peut générer des données différentes en termes de format, de résolution et de fréquence, ce qui rend difficile la création d'un modèle unique adapté à tous. Deuxièmement, les capteurs peuvent être déployés dans des environnements variés avec des conditions changeantes, ce qui nécessite une adaptation constante du modèle d'IA pour garantir des performances optimales dans le temps. Troisièmement, les contraintes de puissance de calcul et de mémoire sur les dispositifs IoT limitent la complexité des modèles d'IA pouvant être exécutés localement. Enfin, la présence de biais dans les données provenant de différents capteurs peut compliquer la généralisation, car les modèles doivent être entraînés pour prendre en compte ces variations.

Dans ce contexte de plus en plus complexe, on comprend qu'une gestion manuelle des modèles d'IA mis en œuvre dans un système de supervision d'un environnement industriel réel est devenue difficilement réalisable. On connait du document FR2977422A1 une méthode de configuration automatique d'entités physiques détectées dans un environnement par un système de supervision qui s'appuie sur des mesures de capteurs permettant de révéler des états de l'entité physique détectée pour sélectionner le modèle à états préenregistré qui lui correspond le plus. Dans certains modes de réalisation, le modèle à états peut être modifié par exemple en supprimant des états qui ne sont pas pertinents pour l'entité physique détectée. Le document EP4102253A1 concerne un dispositif de contrôle d'utilisation des ressources de capteurs (par exemple des LIDAR, RADAR, caméras) d'un système multi-capteurs (par exemple un avion, un bâtiment naval) configuré pour exécuter des fonctions à partir d'informations délivrées par les capteurs. Le dispositif de contrôle exploite les prédictions de modèles d'intelligence artificielle préalablement entraînés respectivement à prédire les performances de capteurs en réponse à une demande opérationnelle, pour optimiser automatiquement l'utilisation des ressources de ces capteurs, sans requérir un niveau d'expertise important d'un opérateur.

La présente invention vise à améliorer la situation, notamment à permettre une gestion automatisée de modèles de prédiction de données généralisés à des groupes de capteurs de données déployés dans un environnement industriel à superviser.

### RESUME DE L'INVENTION

La présente invention est définie dans les revendications indépendantes. Les modes de réalisation préférés sont définis dans les revendications dépendantes. D'autres aspects et exemples sont fournis pour faciliter la compréhension de l'invention.

Dans un contexte de généralisation de modèles d'IA à plusieurs capteurs de données déployés dans un environnement réel, le procédé propose une approche tout-à-fait nouvelle et inventive pour superviser de façon automatisée ces modèles d'IA. Elle consiste à détecter la survenue d'éventuelles dérives et à faire évoluer les modèles d'IA au fil du temps, sur la base des dérives détectées.

Notamment, le jeu de données utilisé pour évaluer une nouvelle version d'un modèle d'IA est enrichi de façon continue avec les données de mesure que le modèle d'IA a mal prédites, ce qui permet de garantir une adaptation de ce modèle à des changements de comportement de l'environnement. Le modèle d'IA réentraîné n'est mis à disposition pour être redéployé qu'une fois qu'il a réussi la phase d'évaluation sur ce jeu de données enrichi.

Le procédé s'applique à tout type d'environnement réel dans lequel une pluralité de capteurs et des modèles d'intelligence artificielle ont été déployés pour en surveiller le comportement. Le procédé de gestion des modèles d'IA permet, en garantissant un niveau optimal de performances des modèles d'IA au cours du temps, d'anticiper, voire de prévenir ses dysfonctionnements et donc d'économiser des ressources de maintenance.

Il s'applique tout particulièrement à la supervision d'un environnement industriel tel que par exemple un réseau de collecte d'eaux usées et pluviales.

L'évaluation comprend les sous-étapes de :
- déterminer un score de performance du modèle d'intelligence artificielle réentraîné avec le jeu d'évaluation,
- comparer le score de performance avec un score de performance obtenu par le modèle d'intelligence artificielle avant réentraînement, et
- décider que l'évaluation est réussie, lorsque le score de performance du modèle réentraîné est supérieur ou égal à celui de la version précédente.

De la sorte, on garantit que les performances des modèles d'IA se maintiennent voire s'améliorent au fil du temps.

Selon un ou plusieurs modes de réalisation, le procédé comprend en outre les étapes de :
- obtenir de la table de données de mesures, des mesures collectées par le capteur de référence d'undit groupe de capteurs de données de ladite pluralité, pour une première et une deuxième périodes temporelles distinctes,
- comparer les mesures collectées par ledit capteur de référence pour les première et deuxième périodes temporelles à l'aide d'une deuxième métrique de distance ;
- lorsque la distance obtenue est supérieure à un deuxième seuil donné, sélectionner un nouveau capteur de référence pour ledit groupe, le nouveau capteur de référence sélectionné étant associé à une plus petite distance entre les mesures collectées pour les première et deuxième périodes temporelles,
- réentraîner ledit modèle à partir d'au moins un jeu d'apprentissage comprenant au moins une partie des données d'un historique de données de mesure collectées par le nouveau capteur de référence stocké dans ladite table de données de mesures et changer ledit capteur de référence de groupe,
- rechercher un autre groupe de capteurs auquel assigner ledit capteur de référence, en fonction d'une distance entre des données collectées par un capteur de référence associé audit autre groupe et celles collectées par ledit capteur de référence, et lorsque ladite distance est inférieure à un troisième seuil donné, assigner ledit capteur de référence audit autre groupe.

Par exemple, la première période temporelle a été supervisée lors d'une mise en œuvre précédente du procédé et la deuxième période temporelle, plus récente, n'a jamais fait l'objet d'une supervision pour le groupe de capteurs.

Selon ce mode de réalisation, le procédé permet ainsi de superviser les données des capteurs de données et notamment de détecter d'éventuels changements des propriétés statistiques des données qu'ils mesurent au fil du temps. En cas de dérive détectée, la constitution des groupes de capteurs est adaptée et les modèles réentraînés en conséquence. Cette double supervision permet de s'adapter à une évolution de l'environnement réel et garantit de maintenir les performances du système au cours du temps.

Selon un ou plusieurs modes de réalisation, le procédé comprend les étapes de :
- lorsque ladite distance est supérieure ou égale audit troisième seuil donné, créer un nouveau groupe de capteurs de données comprenant ledit capteur de référence, entraîner un nouveau modèle d'intelligence artificielle associé au nouveau groupe de capteurs à partir d'au moins un jeu d'apprentissage comprenant au moins une partie des données d'un historique de données de mesure collectées par le capteur de référence, stocké dans ladite table de données de mesures ;
- une fois ledit nouveau modèle de prédiction entraîné, évaluer le nouveau modèle d'intelligence artificielle à l'aide d'un jeu d'évaluation comprenant au moins une partie desdites mesures obtenues, pour lesquelles la distance obtenue est supérieure audit deuxième seuil donné ;
- en cas d'évaluation réussie, mettre à disposition ledit nouveau modèle d'intelligence artificielle en vue de son déploiement dans l'environnement .

Par exemple, le jeu d'évaluation est celui du groupe de capteurs auquel appartenait le capteur de référence, auquel on ajoute, pour la deuxième période temporelle, une partie des données du capteur de référence à l'origine de la dérive détectée.

Un avantage est de garantir un regroupement cohérent et efficace des capteurs, chacun des groupes évoluant dynamiquement en fonction des évolutions de l'environnement réel.

Selon un ou plusieurs modes de réalisation, l'évaluation du nouveau modèle d'intelligence artificielle comprend les sous-étapes de :
- déterminer un score de performance du nouveau modèle d'intelligence artificielle pour le jeu d'évaluation,
- comparer le score de performance avec un score de performance du modèle d'intelligence artificielle dudit groupe, et
- décider que l'évaluation est réussie, lorsque le score de performance du nouveau modèle d'intelligence artificielle est supérieur ou égal à celui dudit modèle d'intelligence artificielle.

Un avantage est que le nouveau modèle d'IA ne pourra être déployé que s'il obtient des performances au moins égales à celles du modèle d'IA du groupe auquel appartenait le capteur de référence.

Selon un ou plusieurs modes de réalisation, le procédé comprend en outre les étapes de :
- obtenir des informations relatives à un ajout d'un nouveau capteur de données dans ledit environnement réel, comprenant un historique de mesures collectées par ledit capteur,
- rechercher un groupe de capteurs parmi lesdits groupes, auquel assigner le nouveau capteur de données, en fonction d'une distance entre des données collectées par un capteur de référence associé à undit groupe et celles collectées par ledit nouveau capteur,
- lorsque ladite distance est inférieure à un troisième seuil donné, assigner ledit nouveau capteur audit groupe et,
- lorsque ladite distance est supérieure ou égale audit troisième seuil donné, créer un nouveau groupe de capteurs de données comprenant ledit nouveau capteur comme capteur de référence,
- entraîner un nouveau modèle d'intelligence artificielle associé au nouveau groupe de capteurs,
- une fois ledit nouveau modèle de prédiction entraîné, évaluer le nouveau modèle d'intelligence artificielle à l'aide d'un jeu d'évaluation comprenant au moins une partie desdites mesures obtenues, pour lesquelles la distance obtenue est supérieure audit deuxième seuil donné,
- en cas d'évaluation réussie, mettre à disposition ledit nouveau modèle d'intelligence artificielle en vue de son déploiement dans l'environnement.

Un avantage est la prise en compte automatisée d'un nouveau capteur par le système.

Par exemple, le jeu d'évaluation est celui d'un groupe de capteurs du même type, auquel on ajoute, pour la deuxième période temporelle, une partie des données du nouveau capteur de données.

Selon un ou plusieurs modes de réalisation, le procédé comprend une étape de lire un fichier informatique de gouvernance, stocké en mémoire, décrivant pour lesdits groupes de capteurs, les modèles d'intelligence artificielle associées auxdits groupes, le capteur de référence et des paramètres opérationnels de contrôle d'opérations exécutées lors de la mise en œuvre desdites étapes.

Le fait de regrouper toutes ces informations dans un même fichier de données qui est lu avant de déclencher les opérations de gestion des modèles par le procédé permet de lui donner un accès simplifié aux informations dont il a besoin pour s'exécuter. Un autre avantage est de permettre de les modifier sans avoir à modifier les codes sources du procédé, des outils, modules et/ou applications mis en œuvre.

Selon un ou plusieurs modes de réalisation, le procédé comprend l'étape de mettre à jour le fichier informatique de gouvernance lorsque des changements ont été apportés auxdits groupes de capteurs.

Selon un plusieurs modes de réalisation, cette mise à jour concerne un identifiant d'un nouveau capteur de référence dans un groupe existant, un nouveau groupe de capteurs et un modèle d'IA associé, etc. Un avantage est de garantir qu'il dispose d'informations complètes, fiables et à jour pour s'exécuter.

Selon un ou plusieurs modes de réalisation, le procédé comprend l'étape de générer un rapport d'événement comprenant des informations relatives à des opérations exécutées lors de la mise en œuvre desdites étapes et de le mettre à disposition.

De la sorte, un utilisateur en charge de surveiller le fonctionnement automatisé du système peut connaître les séquences d'actions mises en œuvre. Les rapports peuvent aussi être exploités pour générer automatiquement un tableau de bord comprenant un ou plusieurs indicateurs clés décrivant les performances du système informatique.

Selon un ou plusieurs exemples de mise en œuvre, le dispositif précité est configuré pour mettre en œuvre le procédé selon le premier aspect, dans ses différents modes de réalisation.

Corrélativement, selon un troisième aspect, le dispositif précité est intégré dans un système informatique de gestion de modèles de prédiction comprenant :
- au moins un registre de données stockant des modèles d'intelligence artificielle préalablement entraînés à prédire des mesures de capteurs de données pour une période temporelle suivante, à partir de données collectées pour une période temporelle précédente,
- au moins un entrepôt de données comprenant une table de données, comprenant un historique des données de mesure collectées par les capteurs de données et une table de données comprenant un historique de prédictions de mesures des capteurs par lesdits modèles d'intelligence artificielle,
- au moins une mémoire stockant un fichier informatique de gouvernance décrivant les groupes de capteurs, et pour undit groupe de capteurs, le modèle de prédiction, la table de données de mesures et des paramètres opérationnels de contrôle d'opérations exécutées par ledit dispositif.

L'invention concerne aussi un produit programme d'ordinateur comportant des instructions pour l'exécution du procédé précité.

L'invention concerne enfin un support d'enregistrement non volatile, lisible par un ordinateur, sur lequel est enregistré le programme d'ordinateur précité.

Le dispositif, le système informatique, le produit programme d'ordinateur et le support d'enregistrement procurent au moins les mêmes avantages que le procédé selon le premier aspect.

Bien sûr les modes de réalisations qui viennent d'être présentés peuvent être combinés entre eux.

### BREVE DESCRIPTION DES FIGURES

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.
La figure 1 représente une vue schématique globale d'un système de gestion d'une pluralité de modèles d'intelligence artificielle, selon un mode de réalisation particulier.
La figure 2 représente un exemple de fichier informatique de gouvernance.
La figure 3 représente un organigramme d'étapes d'un procédé de gestion d'une pluralité de modèles d'intelligence artificielle préalablement entraînés à prédire des mesures collectées par des capteurs de données, correspondant à un fonctionnement du système de la figure 1, permettant de corriger une dérive des prédictions desdits modèles, selon un mode de réalisation de l'invention.
La figure 4 représente un organigramme d'étapes supplémentaires du procédé pour corriger une dérive des observations mesurées par undit capteur de données, selon un autre mode de réalisation.
La figure 5 représente un organigramme d'étapes supplémentaires du procédé pour prendre en compte un capteur de données supplémentaire, selon un autre mode de réalisation.
La figure 6 présente schématiquement un exemple de structure matérielle d'un dispositif d'accès à des informations contenues dans les tables de données, selon un mode de réalisation.

### DESCRIPTION DETAILLEE

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

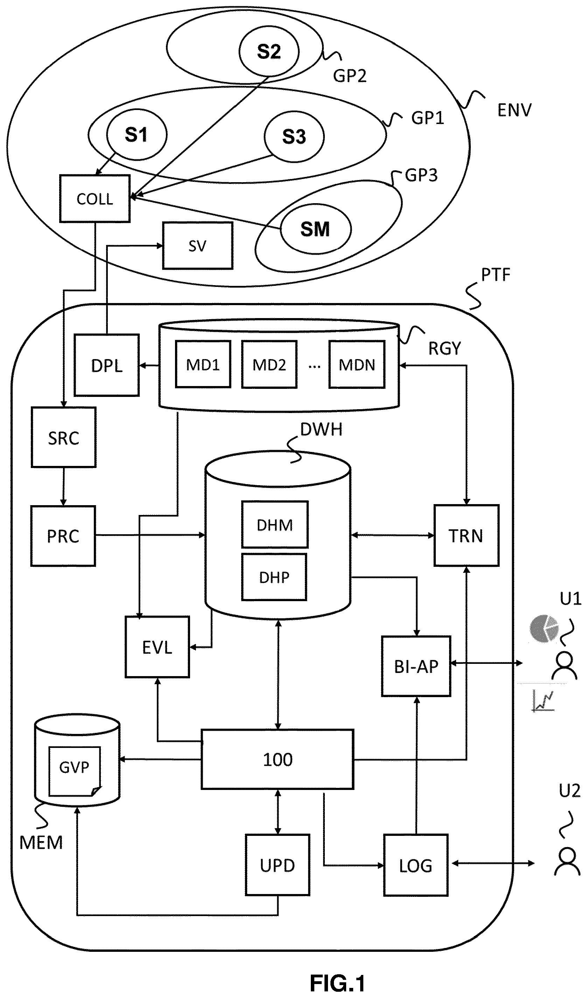

La figure 1 représente une architecture globale d'un système ou plateforme PTF de gestion d'un ensemble de modèles d'Intelligence Artificielle IA MD1, MD2, ...MDN, avec N entier non nul, préalablement entraînés à prédire pour une période temporelle future une évolution de mesures faites par des capteurs de données S1, S2, ... SM, avec M entier non nul, placés dans un environnement réel ENV, à partir d'observations ou mesures faites par ces capteurs de données pour une période temporelle donnée. Par exemple, les mesures des capteurs sont collectées par un collecteur COLL. Par exemple, pour le réseau de collecte d'eaux usées et pluviales précédemment cité, la période temporelle future considérée peut être d'un quart d'heure, d'une demi-heure, d'une heure etc. Quant à la période temporelle passée, sa durée peut varier selon les applications. Pour l'exemple précédent, elle peut être au moins aussi longue que la période temporelle future.

Les modèles d'IA en question peuvent être de types variés, parmi lesquels on cite à titre d'exemples purement illustratifs des réseaux de neurones convolutifs CNN (de l'anglais, « Convolutional Neural Network »), des réseaux de neurones récurrents RNN (de l'anglais, « Récurrent Neural Network »), des arbres de décision, des modèles de régression linéaire, etc. L'apprentissage de ces modèles est supervisé et réalisé à partir d'un historique de données de mesure des capteurs de données stocké en mémoire.

Selon cette architecture, les capteurs de données sont regroupés en une pluralité de groupes GP₁ à GP_{N}, généralement par type. On note qu'ils peuvent aussi être regroupés en fonction de propriétés statistiques communes des séries temporelles de données de mesure qu'ils collectent, chaque groupe GPᵢ étant associé à un modèle IA MDᵢ donné. Autrement dit, ce même modèle d'IA MDᵢ est mis en œuvre pour prédire une évolution temporelle des données de mesures de tous les capteurs du groupe GPᵢ.

Le système PTF comporte plusieurs composants qui interagissent entre eux pour permettre une gestion de ces modèles d'IA, notamment pour les maintenir et les faire évoluer.

Le système PTF comporte au moins une mémoire dans laquelle une ou plusieurs versions des modèles d'IA, MD₁ à MD_{N}, sont stockées. Il s'agit par exemple d'un registre de modèle RGY (de l'anglais, « model registry »). Dans le contexte de l'intelligence artificielle, ce terme fait référence à un module ou système permettant de stocker, organiser et gérer de manière centralisée des modèles d'IA. Les registres de modèles sont souvent utilisés dans des environnements partagés par plusieurs équipes travaillant sur des projets d'IA, et ils jouent un rôle crucial dans le cycle de vie des modèles. En particulier, ils permettent de stocker les différentes versions des modèles d'IA de manière centralisée. Cela facilite la recherche, la récupération et la gestion des modèles. Ils facilitent aussi la gestion des différentes versions d'un modèle, enregistrant les changements apportés, les hyperparamètres utilisés, les jeux de données associés, etc. Cela garantit la traçabilité des modèles, ce qui est essentiel pour comprendre l'évolution d'un modèle au fil du temps. Dans un environnement collaboratif, plusieurs équipes ou chercheurs peuvent travailler sur des modèles similaires ou connexes. Un registre de modèles permet de collaborer de manière plus efficace en évitant les conflits, en partageant les résultats et en assurant la cohérence des modèles utilisés dans différents projets. En enregistrant toutes les informations nécessaires pour reproduire un modèle (code source, données, hyperparamètres, etc.), un registre de modèles facilite la reproductibilité des expériences et des résultats. Ces registres de modèles peuvent également offrir des fonctionnalités de déploiement intégrées, permettant de déployer facilement un modèle entraîné vers des environnements de production. Ils peuvent en outre inclure des fonctionnalités pour surveiller les performances des modèles en production, en collectant des métriques telles que la précision, le rappel, etc. Ils peuvent enfin intégrer des mécanismes de gestion des autorisations, permettant de contrôler qui peut accéder, modifier ou déployer un modèle spécifique.

En résumé, un registre de modèles simplifie la gestion, le suivi et la collaboration autour des modèles d'IA, contribuant ainsi à une utilisation plus efficace des ressources et à une meilleure qualité des résultats. C'est un outil important dans le développement et le déploiement d'applications basées sur l'IA, en particulier dans des environnements complexes où plusieurs équipes interagissent.

Le système PTF comporte aussi un module source SRC configuré pour obtenir des données d'observations ou de mesure en provenance de la pluralité de capteurs de données S1, S2, ..., SM de l'environnement ENV, par exemple via le collecteur COLL. Par exemple, ces données de mesure prennent la forme de séries temporelles. La fréquence de collecte des données de capteurs IoT dépend largement du contexte d'application, des besoins spécifiques du système et des contraintes opérationnelles. Il s'agit notamment de la nature des données, des contraintes liées à la consommation d'énergie des capteurs qui peuvent être alimentés par une batterie, de leur capacité de stockage, des contraintes liées à la natures des événements surveillés, des contraintes de coût de transmission des données (par exemple, la tarification peut se faire au volume de données transmis pour certains réseaux de communication), etc. Une analyse préalable des besoins spécifiques de l'application et la mise en œuvre de tests pilotes permettent de déterminer la fréquence de collecte optimale des données. Dans de nombreux cas, la flexibilité est importante, et les systèmes IoT peuvent être configurés pour ajuster dynamiquement la fréquence de collecte en fonction des conditions changeantes ou des besoins spécifiques. Par exemple, les capteurs du réseau de collecte d'eaux usées et pluviales collectent en moyenne une mesure par minute. Elles sont ensuite agrégées au quart d'heure pour réduire la taille de l'historique des données de mesure enregistrées par capteur.

Le système PTF comporte également un module PRC de traitement de données configuré pour accéder aux données sources obtenues des capteurs de données par le module SRC et exécuter un ou plusieurs traitements de ces données, et un module de chargement pour charger les données traitées dans une table de données DHM stockée dans un entrepôt de données décisionnelles DWH du système PTF, par exemple une base de données relationnelle. La table de données DHM regroupe l'ensemble des observations mesurées par les capteurs S1 à SM, ou historique de mesures, depuis leur mise en service dans l'environnement ENV.

Par exemple, les traitements effectués par le module PRC peuvent inclure un nettoyage et/ou filtrage des données source pour éliminer bruit et artéfact, un changement de format et/ou un transcodage des données pour les rendre compatibles avec un référentiel connu de la plateforme PTF. Le traitement des données de capteurs IoT pour retirer les anomalies, les biais et le bruit est une étape cruciale pour garantir la qualité et la fiabilité des informations obtenues. Da façon non exhaustive, les traitements suivants peuvent être appliqués :
- Filtrage des données (filtrage numérique) : des filtres numériques peuvent être utilisés pour atténuer le bruit dans les signaux des capteurs. Les filtres passe-bas, passe-haut ou passe-bande peuvent être adaptés en fonction des caractéristiques du signal et du type de bruit présent,
- Moyennage et lissage : l'application de techniques de moyennage peut contribuer à lisser les fluctuations aléatoires dans les données. Cela peut être utile pour atténuer le bruit, en particulier dans les situations où des variations mineures ne sont pas significatives,
- Détection d'anomalies (en anglais, « outliers ») : les techniques de détection d'anomalies, telles que la détection statistique d'anomalies ou l'utilisation d'algorithmes d'IA, peuvent être employées pour identifier et éliminer les données anormales qui pourraient résulter de capteurs défectueux, d'erreurs de mesure ou d'autres sources de perturbation. Pour ce faire, on peut tirer parti de mesures de plusieurs capteurs de types voisins, par exemple un capteur de niveau d'eau et un capteur de profondeur, en confrontant leurs mesures, de sorte à détecter d'éventuelles incohérences,
- Correction des erreurs systématiques (biais) : l'identification et la correction des erreurs systématiques, telles que des biais dans les capteurs, peuvent être réalisées en calibrant les capteurs ou en appliquant des corrections appropriées aux données,
- Interpolation : l'interpolation peut être utilisée pour remplacer les données manquantes ou les valeurs aberrantes par des estimations basées sur les données avoisinantes. Cela peut contribuer à fournir des ensembles de données plus complets et plus cohérents,
- Transformation des caractéristiques : certaines transformations des caractéristiques, telles que la normalisation, la standardisation ou la transformation logarithmique, peuvent être appliquées pour rendre les données plus adaptées à l'analyse statistique et réduire les effets de biais.

Une fois traitées par le module PRC, les données de mesure sont utilisées pour générer des tables de données prêtes à être utilisées pour la gestion des modèles d'IA MD₁ à MD_{N} par le système PTF, en particulier leur entraînement et leur évaluation. Pour ce faire, elles sont construites conformément à un schéma de base de données, défini en fonction des besoins de l'entreprise, qui décrit les tables, les relations entre les tables de données, les clés primaires et étrangères, ainsi que d'autres contraintes d'intégrité sur les données qu'elles contiennent. Ainsi, la table de données DHM présente la structure requise pour permettre d'en extraire des données d'entrée à présenter à un des modèles d'IA et des données ayant valeur d'étiquettes (en anglais, « labels »), représentatives de la réalité du terrain. Ces données d'entrée et leurs étiquettes associées sont généralement regroupées pour former des jeux de données d'apprentissage ou d'entraînement, de test et d'évaluation, comme décrit ci-après.

Dans l'exemple considéré, la table de données DHM comprend au moins les colonnes suivantes :
- date de la mesure,
- mesure,
- identifiant du capteur
- identifiant du groupe de capteur.

Ceci n'est bien sûr qu'un exemple illustratif et non limitatif, d'autres organisations peuvent être considérées.

Dans un exemple d'application, l'environnement réel ENV est un environnement industriel, par exemple un réseau de collecte d'eaux usées et pluviales. Des milliers de capteurs de données sont placés sur l'ensemble du réseau pour mesurer des grandeurs physiques de type température, pression, niveau d'eau, etc., sur des périodes temporelles successives. Dans cet exemple d'applications, le but de recourir à des modèles d'IA est d'obtenir automatiquement des prédictions d'une évolution de ces différentes mesures pour une période future, à partir desquelles un dysfonctionnement peut être prédit et anticipé. Par exemple, il arrive qu'un phénomène de blocage se produise dû à la présence d'une racine d'un arbre qui obstrue un conduit. Cette situation peut être très problématique, par exemple lorsque les eaux usées se superposent aux eaux pluviales et débordent dans la nature, entraînant une pollution des sols. Dans cet exemple, les mesures de température, pression, niveau d'eau collectées au fil du temps par la pluralité de capteurs de données sont reçues par le système PTF, traitées, puis stockées dans la table de données DHM. Cet historique de données, est destiné à être exploité pour l'apprentissage des modèles d'IA MD1 à MDN et pour leur évaluation par le système PTF.

Le système PTF comprend aussi un module TRN d'entraînement des modèles d'IA à l'aide d'un jeu de données d'apprentissage constitué pour chaque groupe GPᵢ à partir des données de mesure d'un capteur donné de ce groupe, stockées dans la table de données de mesure DHM. Ce module est configuré pour mettre en œuvre une phase initiale d'apprentissage, puis une fois que le modèle d'IA a été mis en production dans l'environnement ENV, des phases régulières de réentraînement.

Le système PTF comprend aussi un module EVL d'évaluation des modèles d'IA, une fois la phase d'apprentissage (entraînement ou réentraînement) terminée. Elle s'appuie, pour chaque modèle d'IA, sur un jeu de données d'évaluation comprenant lui aussi des données de mesure d'un capteur du groupe et des étiquettes associées. Bien sûr, pour éviter tout biais, les jeux utilisés pour l'apprentissage et l'évaluation sont disjoints. On notera que généralement, les jeux d'évaluation sont constitués en amont du projet, c'est-à-dire avant la phase initiale d'entraînement et de déploiement des modèles d'IA. Par exemple, un tel jeu comprend des mesures collectées par un capteur du groupe sur tout l'historique. Le module d'évaluation a pour objectif de vérifier que le modèle d'IA qui vient d'être entraîné est suffisamment performant, c'est-à-dire qu'il prédit suffisamment bien les mesures des capteurs du groupe pour être déployé. En particulier, lorsqu'il s'agit de remplacer une version antérieure du modèle d'IA déjà en production par une nouvelle version, le module EVL est configuré pour vérifier que la nouvelle version du modèle d'IA est au moins aussi performante que la version antérieure, avant qu'elle soit déployée.

Le système PTF comprend aussi un module DPL de mise à disposition et de déploiement des modèles d'IA une fois entraînés et évalués. On entend par mise à disposition le stockage et/ou la transmission des modèles d'IA prêts à être déployés et par déploiement, la mise en service d'un modèle dans l'environnement de production ENV. Ce module DPL est par exemple connecté à un module de communication (non représenté) du système PTF, par l'intermédiaire duquel le modèle d'IA est transmis à un serveur de données SV de l'environnement ENV, configuré pour l'utiliser pour prédire des mesures de capteurs pour une période temporelle suivante à partir de données collectées pour une période temporelle précédente. A cet égard, le serveur de données SV comprend au moins une mémoire pour stocker les modèles d'IA MD₁ à MD_{N} et au moins un processeur pour les exécuter. Selon une variante, les modèles d'IA sont déployés au niveau d'un hébergeur distant et connecté au serveur SV local par l'intermédiaire d'un réseau de télécommunications (non représenté). Dans ce cas, les modèles d'IA sont exécutés dans des serveurs distants, par exemple dans une ferme de serveurs ou sous la forme d'un service accessible par l'intermédiaire d'un réseau en nuage (de l'anglais, « cloud computing »).

Le système PTF comprend en outre un dispositif 100 de gestion des modèles d'intelligence artificielle MD1, MD2, ..., MDN entraînés à prédire des mesures collectées par la pluralité de capteurs placés dans l'environnement réel ENV, lesdits modèles de prédiction étant stockés en mémoire du système informatique PTF, par exemple dans le registre de modèles RGY, le dispositif 100 étant configuré pour obtenir des mesures collectées par un capteur de référence d'un groupe d'au moins un desdits capteurs de données, pour une période temporelle passée, lesdites mesures dites historiques étant stockées dans la table de données DHM, obtenir des mesures prédites dudit capteur de référence à l'aide d'undit modèle de prédiction associé audit groupe de capteurs pour une période temporelle suivante, lesdites mesures prédites étant stockées dans une table de données historique de prédiction DHP de l'entrepôt de données DWH, comparer les mesures prédites pour la période temporelle suivante avec des mesures collectées par ledit capteur de référence pour la période temporelle suivante, lorsqu'une différence déterminée entre les mesures comparées est supérieure à un seuil de dérive de prédiction donné, sélectionner un nouveau capteur de référence pour ledit groupe, le nouveau capteur de référence sélectionné étant le capteur de données dudit groupe associé à la plus faible différence, et réentraîner le modèle d'IA à partir des données historiques de mesure collectées par le nouveau capteur de référence.

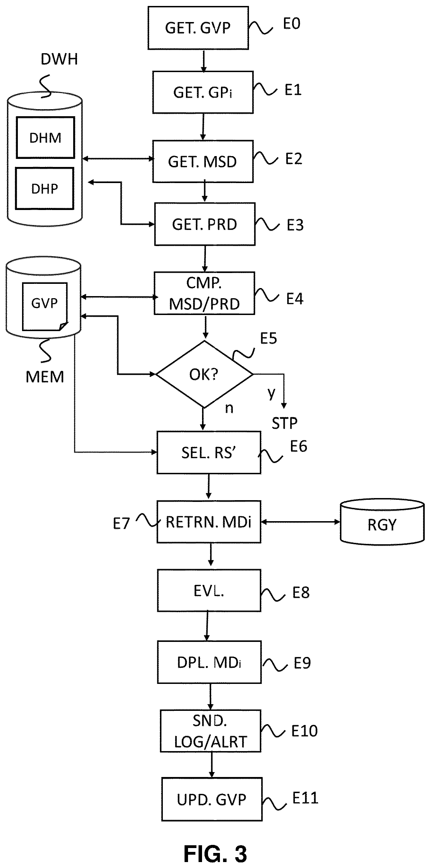

Selon un ou plusieurs exemples, le dispositif 100 met en œuvre un procédé de gestion de modèles d'intelligence artificielle MD1, MD2...MDN qui va être décrit ci-après en relation avec la FIG. 3.

Le système PTF comprend aussi un module LOG de création et de transmission de rapports ou journaux d'événements dans lesquels sont consignés notamment les cas de dérive détectés. Les rapports d'événements générés peuvent aussi être exploités par une application BI-APP de génération de tableaux de bords comprenant des indicateurs clés de performance KPI (de l'anglais, « Key Performance Indicator ») relatifs à un fonctionnement du système PTF et/ou des modèles d'IA qu'il gère.

Le système PTF comprend également des moyens d'interface utilisateur, non représentés, permettant à un utilisateur U1, par exemple un analyste (de l'anglais, « data scientist »), d'obtenir ces tableaux de bord.

Un module central de contrôle, non représenté, comportant un ou plusieurs processeurs, permet de contrôler le fonctionnement des différents éléments du système PTF.

Le système PTF peut appartenir à une entreprise en charge de la supervision de l'environnement ENV, par exemple une régie des eaux et être hébergé sur site ou, en alternative, être hébergé à distance, par exemple dans des infrastructures publiques sur internet (« public cloud », en anglais).

Le système PTF est implémenté par des moyens hardware (matériel) et des moyens software (logiciel). Les moyens hardware peuvent comprendre un ou plusieurs processeurs. Les moyens software peuvent comprendre des applications, logiciels, programmes d'ordinateur, et/ou un ensemble d'instructions de programme et de données.

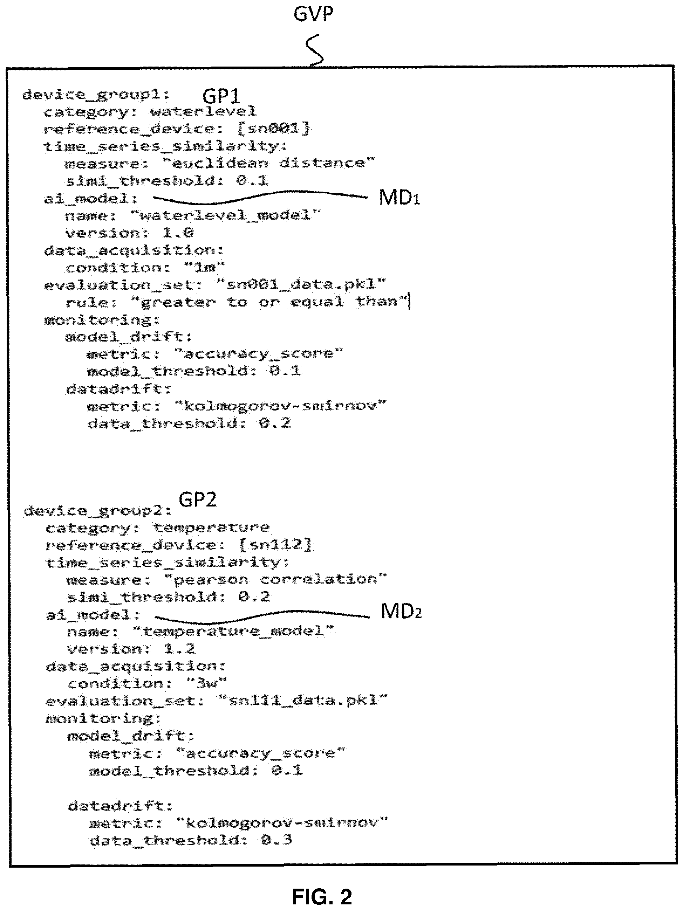

Selon un ou plusieurs exemples, le système PTF comprend également un module ou agent de mise à jour UPD configuré pour mettre à jour des données stockées en mémoire et nécessaires au fonctionnement du système PTF. Il s'agit par exemple de données de configuration, précisant par exemple une mesure de similarité, un seuil de dérive, le capteur de référence de chaque groupe de capteurs de données etc. Un exemple de mise en œuvre est maintenant détaillé en relation avec la FIG. 2.

Dans ce mode de réalisation particulier, le système PTF comprend un fichier informatique de gouvernance et/ou de paramétrage GVP, stocké en mémoire MEM. Ce fichier informatique peut être un fichier déclaratif, par exemple de type CSV, YAML, XML ou autre. Un exemple purement illustratif de fichier de gouvernance GVP est présenté sur la FIG. 2. Il contient des informations relatives aux groupes GP₁, GP₂, ..., GP_{N}, avec N entier non nul, de capteurs de données, dans l'exemple de la FIG. 2, GP₁ et GP₂, comprenant pour chaque groupe une catégorie ou type de capteur, le ou les identifiants (non représentés) de tous les capteurs constituant ce groupe, le ou les identifiants du ou des capteurs de données de référence pour ce groupe, c'est-à-dire le ou les capteurs de données dont les données de mesure vont être utilisées pour gérer la pluralité de modèles d'IA. Il comprend également un identifiant et un numéro de version du modèle d'IA associé au groupe. Il décrit également des paramètres opérationnels de contrôle d'opérations du système PTF, destinés à être utilisés par des entités du système PTF, et notamment le dispositif 100, pour exécuter diverses opérations. Par exemple, le groupe GP₁ comprend deux capteurs sn001 et sn002 appartenant à la catégorie « niveau d'eau ». Le modèle d'IA MD₁ associé est un « modèle de niveau d'eau » et la version 1.0 est utilisée. En ce qui concerne le groupe GP₂, il comprend lui aussi deux capteurs de données sn111 et sn112 de type capteur de température. Le modèle d'IA actif en production est un modèle de température dans sa version 1.2.

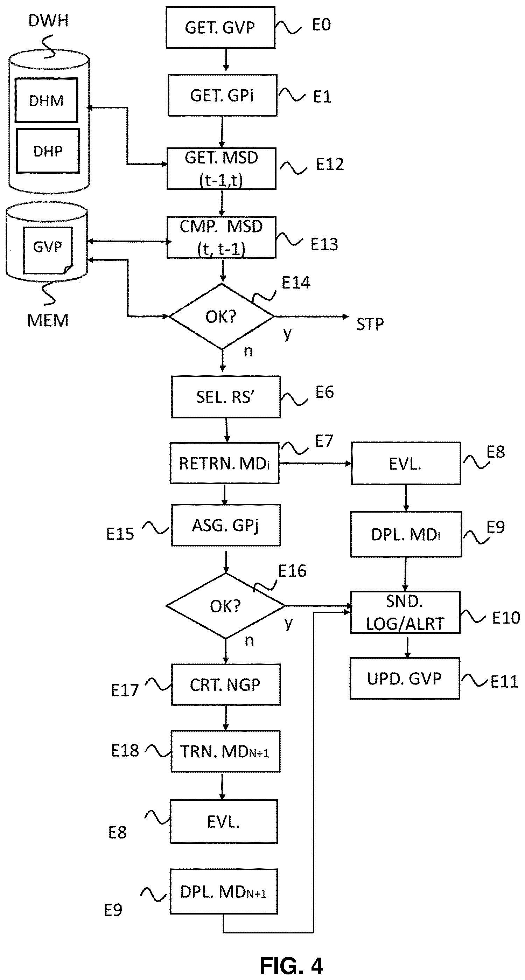

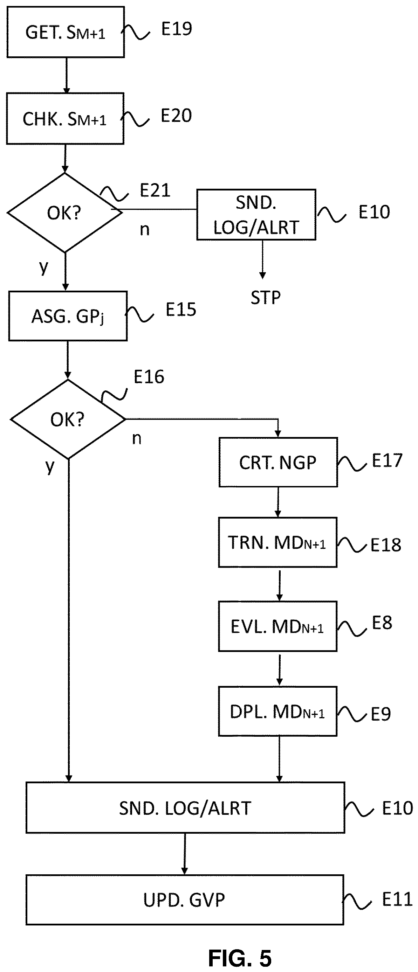

A titre d'exemple illustratif et non limitatif, le fichier de gouvernance GVP spécifie :
- un ou plusieurs paramètres relatifs à l'acquisition de données historiques de mesure par les capteurs de données du groupe. En particulier, il précise une condition de durée temporelle minimale d'acquisition de ces données, c'est-à-dire une ancienneté, et par conséquent, un volume de données nécessaires pour qu'un capteur de données puisse être intégré à ce groupe. Bien sûr, cette condition dépend d'un type de données mesurées par le capteur. On comprend qu'une condition de durée supérieure à un an permet de capturer une éventuelle saisonnalité des mesures collectées, en particulier lorsque les mesures sont liées à la nature et aux conditions météorologiques. Par exemple, pour le premier groupe GP₁, elle est de trois ans (« 3y ») alors que pour le deuxième groupe GP₂, elle est d'un an (« 1y »).
- des paramètres opérationnels destinés à être utilisés par le dispositif 100 dans un ou plusieurs modes de réalisation et/ou par un ou plusieurs modules du système PTF. Ils comprennent notamment des conditions, règles et métriques destinées à être utilisées par le dispositif 100 pour superviser un modèle d'IA en production et détecter une éventuelle dérive de ses performances. Par exemple, pour le premier groupe GP₁, la métrique à utiliser pour comparer les prédictions du modèle d'IA pour une période temporelle donnée, aux mesures réellement collectées par un capteur du groupe GP₁ est une métrique représentative d'une précision du modèle (en anglais, « accuracy-score ») et le seuil de dérive est fixé à 0.1 (au-delà de ce seuil, il est décidé que le modèle dérive). Selon un mode de réalisation, qui sera détaillé ci-après en relation avec la FIG. 4, il s'agit aussi de paramètres opérationnels destinés à être utilisés par le dispositif 100 pour détecter une dérive des données mesurées par un ou plusieurs capteurs de données. Dans ce cas, les paramètres opérationnels indiquent une métrique à utiliser pour mesurer une similarité entre des données de mesures collectées par le capteur sur une période temporelle passée et celle collectées sur une période temporelle courante et un seuil de dérive associé. Par exemple pour le premier groupe GP₁, la métrique à utiliser est celle de « komogorov-smirnov » et le seuil de dérive associé est de 0.2. Selon encore un autre mode de réalisation, il s'agit enfin de paramètres opérationnels destinés à être utilisés par le module TRN du système PTF pour évaluer un modèle d'IA après un entraînement et avant de le mettre en production. Un exemple de mise en œuvre sera détaillé ci-après en relation avec la FIG. 5, dans le contexte de l'ajout d'un capteur de données supplémentaire à la flotte de capteurs déployés dans l'environnement ENV. Ils spécifient notamment l'emplacement d'un jeu de données d'évaluation ou de test, différent du jeu d'entraînement pour éviter tout biais, et d'un seuil de performance de prédiction. Par exemple, pour le premier groupe GP₁, le jeu de données de test est stocké à l'emplacement indiqué par le chemin relatif et non absolu « sn111-data.pkl ». L'extension .pkl est associée à un fichier de code informatique Python enregistré dans un format « Pickle ». Pickle correspond à un module Python standard qui permet la sérialisation et la désérialisation d'objets Python. En d'autres termes, il permet de sauvegarder des objets Python (par exemple, des modèles d'IA et des jeux de données d'apprentissage ou d'évaluation) dans un fichier au format binaire à l'aide de Pickle, et plus tard, de charger ces objets à partir du fichier pour les réutiliser dans un programme informatique sans avoir à le réentraîner.

Dans l'exemple du groupe GP₁, le seuil de performance spécifié est de 0.95. Autrement dit, on considère qu'un niveau de performance est acceptable (et que le modèle d'IA peut être mis en production) à partir d'un score égal au seuil de performance d'une mesure de similarité, telle que l'index de Jaccard, un seuil de dérive, un premier poids associé au KPI et un deuxième poids associé aux mots clés. Un exemple de mise en œuvre de ces paramètres opérationnels sera détaillé ci-après en relation avec la FIG. 3.

En fonctionnement, chaque élément du système PTF et, en particulier le dispositif 100, peut accéder au fichier GVP et y lire des paramètres opérationnels de contrôle d'opérations ou de tâches à mettre en œuvre.

Le fichier GVP est modifiable, ce qui permet de faire évoluer les capteurs de données constituant un groupe de capteurs, la version du modèle d'IA utilisé et/ou les paramètres opérationnels du système PTF et en particulier du dispositif 100, sans qu'il soit nécessaire de modifier un code source permettant l'exécution de tâches et opérations par le système PTF.

Le module central de contrôle (non représenté) est agencé pour contrôler le fonctionnement du système PTF. Il peut comprendre un orchestrateur de tâches destiné à ordonnancer les tâches exécutées par le système PTF.

On va maintenant décrire un procédé de gestion d'une pluralité de modèles d'IA MD1 à MDN, stockée dans le registre de modèles RGY du système PTF de la FIG. 1, correspondant au fonctionnement du dispositif 100, selon un ou plusieurs modes de réalisation et en référence aux FIGs 3 à 5. Dans l'exemple de la FIG. 3, on décrit en particulier la supervision d'un modèle d'intelligence artificielle d'un groupe de capteurs donné.

Lors d'une étape E0, le fichier informatique de gouvernance GVP est lu, ce qui permet au dispositif 100 d'obtenir la dernière version des paramètres opérationnels qu'il stocke.

Lors d'une étape E1, une information relative à un groupe GPᵢ, avec i compris entre 1 et N, de capteurs de données à traiter est obtenue. Par exemple, on suppose que les différents groupes de capteurs de données sont traités tour à tour par le procédé de gestion, selon un ordre donné, par exemple prédéterminé, qui garantit que le fonctionnement de chacun soit vérifié régulièrement. Par exemple, la supervision d'un groupe de capteurs est déclenchée une fois par mois, le groupe de capteurs à superviser étant choisi aléatoirement ou selon un ordre donné.

Selon un ou plusieurs exemples, ce peut être l'orchestrateur qui commande au dispositif 100 de superviser un groupe donné. Dans la suite, on prend l'exemple du groupe GP1 de capteurs de niveau d'eau de la FIG.2. A l'aide du fichier de gouvernance GVP, un capteur de données de référence RS associé au groupe GPᵢ est identifié parmi les capteurs rattachés au groupe GPᵢ, ainsi qu'un modèle d'IA MDᵢ associé à ce groupe i. On suppose qu'il est en production dans l'environnement ENV et que la table de données historiques de prédiction DHP stockée dans l'entrepôt DWH est approvisionnée au fil de l'eau avec les données que le modèle MDᵢ prédit à partir des données mesurées par le capteur de référence RS.

Lors d'une étape E2, des données de mesure collectées par ce capteur de référence Sm sur une période temporelle donnée, correspondant par exemple au mois dernier, sont obtenues de la table de données historiques DHM stockée dans l'entrepôt de données DWH. Par exemple, la période temporelle donnée correspond à la période écoulée depuis la dernière supervision du modèle MDᵢ. Par exemple, sa valeur est d'un ou plusieurs mois. A cet égard, il convient de dissocier une fréquence de prédiction des mesures du groupe de capteurs GPi par le modèle d'IA MDi, par exemple tous les quarts d'heure, d'une fréquence de supervision des modèles d'IA par le dispositif 100, par exemple, tous les mois.

Lors d'une étape E3, les données prédites pour la même période temporelle par le modèle MDi sont obtenues de la table de données DHP comprenant l'historique de prédiction de ce modèle. A cet égard, les mesures de capteurs peuvent être collectées par le collecteur COLL à une fréquence de collecte donnée, par exemple tous les quarts d'heure, puis transmises au système PTF de gestion des modèles d'IA avec une fréquence de transmission différente, par exemple égale à une fois par mois.

Lors d'une étape E4, les données de mesure obtenues en E2 sont comparées aux données prédites obtenues en E3. On comprend qu'il s'agit de comparer des données de séries temporelles et d'évaluer une mesure de distance/similarité entre elles.

Selon un ou plusieurs modes de réalisation, cette distance est obtenue à l'aide d'une ou plusieurs techniques de détermination de distance, parmi lesquels on cite, à titre purement illustratif et non limitatif, les techniques suivantes :
- une technique de corrélation temporelle mesure la similarité entre deux séries temporelles en examinant la corrélation entre les observations à différents points dans le temps. Une corrélation élevée suggère une similarité temporelle. Cependant, elle ne capture pas d'éventuels décalages temporels.
- une mesure de distance euclidienne mesure la distance géométrique entre les points de deux séries temporelles. Un avantage de cette mesure est qu'elle est simple à calculer, mais elle n'est pas robuste aux décalages temporels ni aux différences d'échelles.
- une technique de Dynamic Time Warping (DTW) qui mesure la similarité entre deux séries temporelles en trouvant une mise en correspondance optimale entre les points tout en autorisant des décalages dans le temps. Elle présente l'avantage d'être robuste aux décalages temporels, mais elle est coûteuse en ressources de calcul.
- une mesure de similarité basée motifs consiste à identifier et comparer les motifs dans les séries temporelles. Elle peut impliquer l'utilisation d'algorithmes de recherche de motifs fréquents ou de techniques de détection de motifs spécifiques.
- une décomposition en séries de Fourier peut être utilisée pour extraire les composants fréquentiels des séries temporelles, et la similarité peut être évaluée en comparant les composants fréquentiels.
- On connaît aussi des méthodes basées sur des modèles d'IA tels que les modèles ARIMA, les réseaux de neurones récurrents (RNN) ou les LSTM (de l'anglais, « Long Short Term Memory »), des RNN mieux adaptés à traiter les dépendances à long terme, qui peuvent être utilisés pour des données temporelles, et la similarité peut être mesurée en comparant les paramètres des modèles.
- des méthodes d'apprentissage automatique, telles que les méthodes de classification ou de régression, peuvent être utilisées pour prédire une séquence de valeurs à partir d'une séquence d'entrée, et la similarité peut être mesurée en comparant les performances prédictives.

Une combinaison de ces techniques peut aussi être utilisée, en fonction de la nature des données. La ou les techniques à utiliser est par exemple spécifiée dans le fichier de gouvernance parmi les paramètres opérationnels associés au groupe de capteurs GPi, et à la tâche de supervision considérée. En l'espèce, l'opération effectuée est une opération de surveillance (en anglais, « monitoring »). Dans l'exemple de la FIG. 2, pour le groupe GP1, la mesure de précision ou distance considérée est un « accuracy score ».

On suppose qu'on obtient un score de similarité que l'on compare en E5 à un seuil de performance du modèle (sur la FIG.2, en anglais, « model_threshold »), lui aussi spécifié dans le fichier de gouvernance GVP. Si le score obtenu est supérieur ou égal au seuil de performance, le modèle d'IA est considéré comme conforme (pas de dérive détectée) et le processus s'arrête. Selon un ou plusieurs modes de réalisation, un rapport d'événement indiquant un fonctionnement conforme est généré par le module LOG et mis à disposition.

Si, au contraire, le score obtenu est inférieur au seuil, le modèle d'IA MDi n'est pas considéré comme conforme (une dérive a été détectée).

En réponse, une action de correction est mise en œuvre. Lors d'une étape E6, un nouveau capteur de référence est recherché au sein du groupe. Pour ce faire, les données de mesure et les données prédites associées pour la période temporelle considérée sont obtenues pour les autres capteurs du groupe que le capteur de référence courant et celui qui obtient le meilleur score de performance du modèle est sélectionné pour devenir le nouveau capteur de référence RS' pour ce groupe.

En E7, une phase de réentraînement du modèle d'IA MDᵢ est déclenchée auprès du module TRN, à partir d'un jeu d'apprentissage formé à partir d'une partie des données historiques de mesure associées au nouveau capteur de référence stockées dans la table de données DHM. A la fin de cette phase de réentraînement, il est testé à partir d'un jeu de test, distinct du jeu d'apprentissage.

A cet égard, il existe plusieurs manières de découper les données historiques de mesure pour former ces deux jeux de données distincts, parmi lesquelles on cite de façon non exhaustive et non limitative :
- découpe aléatoire : la méthode la plus simple consiste à diviser aléatoirement l'ensemble de données en un jeu d'apprentissage et un jeu de test. Par exemple, on pourrait réserver 80% des données pour l'apprentissage et 20% pour les tests,
- découpe stratifiée : lorsque les classes dans un problème de classification ne sont pas équilibrées, il peut être judicieux d'utiliser une découpe stratifiée pour s'assurer que la répartition des classes est maintenue dans les jeux d'apprentissage et de test
- découpe temporelle : pour les séries temporelles, il est souvent nécessaire de respecter l'ordre chronologique des données. Dans ce cas, la découpe peut se faire en utilisant une fenêtre temporelle spécifique, en utilisant les données passées pour l'apprentissage et les données futures pour les tests.
- validation croisée : plutôt que de diviser les données en un seul jeu d'apprentissage et de test, la validation croisée implique de diviser les données en plusieurs ensembles, permettant ainsi d'entraîner et de tester le modèle sur différentes combinaisons d'apprentissage/test. La validation croisée « k-fold » est une méthode courante où les données sont divisées en k plis, et le modèle est entraîné et testé k fois, chaque pli étant utilisé comme ensemble de test exactement une fois.

En E8, une fois le réentraînement du modèle d'IA MDᵢ terminé, une évaluation du modèle réentraîné est déclenchée auprès du module EVL à l'aide d'un troisième jeu de données, dit jeu d'évaluation.

Généralement, selon l'art antérieur, ce jeu d'évaluation est constitué en amont, c'est-à-dire à la constitution du groupe de capteurs, par exemple par un analyste et il n'est pas destiné à être modifié par la suite. Le chemin pour accéder à ce jeu d'évaluation est configuré au préalable, par exemple spécifié dans le fichier de gouvernance GVP.

Un score de performance est évalué et comparé à celui obtenu par la version précédente du modèle MDᵢ (actuellement en production). Une règle de décision, par exemple spécifiée dans le fichier de gouvernance GVP, est de remplacer la version précédente du modèle d'IA par la nouvelle dès lors que la nouvelle version obtient un score de performance au moins aussi bon que celui de la version précédente.

Selon un ou plusieurs modes de réalisation, le procédé décrit ici comprend la mise à jour préalable du jeu d'évaluation stocké en mémoire en lui ajoutant une partie des données de mesures (et étiquettes associées) collectées par l'ancien capteur de référence RS et pour lesquelles une dérive du modèle a été détectée. De la sorte, on garantit que les nouvelles versions des modèles d'IA qui seront déployées suivent l'évolution des mesures et donc s'adaptent en continu à l'environnement à superviser.

A cet égard, une contrainte à respecter lors de la constitution des jeux d'apprentissage et de test du modèle d'IA MDᵢ est de ne pas y intégrer des mesures de capteur du groupe GPᵢ qui sont déjà présentes dans le jeu d'évaluation. Le respect de cette contrainte permet d'éviter d'introduire un biais dans l'évaluation comparée des performances de la nouvelle version du modèle d'IA avec la précédente.

Dans la suite, on suppose que la nouvelle version du modèle MDᵢ a réussi l'évaluation. En E9, la nouvelle version du modèle MDᵢ est mise en production à la place de la version courante. Par exemple, elle est transmise par le module de déploiement DPL du système PTF au serveur SV de l'environnement par l'intermédiaire de moyens de communication du système PTF, puis chargée dans une mémoire, à la place de la version précédente en vue d'être exécutée par un processeur d'un serveur de données. En alternative, elle est transmise à un serveur distant de l'environnement ENV, hébergé dans une infrastructure de type réseau en nuage. Par exemple, cette nouvelle version est transmise au serveur en question dans un fichier au format Pickle.

Il convient de noter que si, au contraire, la nouvelle version du modèle d'IA ne réussit pas le test d'évaluation, la version du modèle d'IA en production reste inchangée. Toutefois, un rapport d'événement LOG est généré de sorte qu'un analyste en charge de surveiller le système PTF soit informé de cet échec et puisse déterminer si une mise à jour d'autres modules est nécessaire. Par exemple, il peut décider de modifier les traitements mis en œuvre sur les données de mesure par le module PRC ou des paramètres de configuration du modèle d'IA lui-même.

Optionnellement, en E10, un rapport d'événement LOG est créé, stocké en mémoire et éventuellement notifié à un utilisateur UT2, par exemple un analyste en charge de maintenir le système PTF.

Lors d'une étape E11, une mise à jour du fichier de gouvernance GVP est déclenchée au niveau de l'agent de mise à jour UPD. Elle comprend la mise à jour de la version du modèle MDᵢ, et de l'identifiant du nouveau capteur de référence RS'.

Le procédé qui vient d'être décrit réalise une supervision des modèles d'IA déployés dans un environnement réel et met en œuvre des actions correctives en cas de dérive détectée des performances d'un de ces modèles.

En relation avec la FIG. 4, on décrit maintenant des étapes additionnelles du procédé pour la supervision des données mesurées par les capteurs, selon un autre mode de réalisation. Elles peuvent être exécutées à la suite des étapes précédentes ou en amont, pour le même groupe de capteurs ou pour un autre, selon un ordre et une cadence donnés, qui peuvent être déterminés en fonction de l'environnement réel ENV, notamment de la nature des grandeurs physiques mesurées par les capteurs de données et de leur propension à évoluer dans le temps. Par exemple, la supervision des données qui va maintenant être décrite selon cet autre mode de réalisation est réalisée en alternance avec celle (des modèles) présentée précédemment en relation avec la FIG. 3.

Les étapes E0 de lecture du fichier de gouvernance GVP et E1 d'obtention d'un groupe de capteurs GPᵢ, déjà décrites, sont répétées. Par exemple, on suppose que le groupe de capteurs sélectionné GPⱼ, avec j différent de i, n'est pas le même dans cette nouvelle phase de supervision que dans celle décrite en relation avec la FIG. 3, et s'applique au groupe GP₂ de la FIG. 2. On obtient du fichier de gouvernance GVP un identifiant du capteur de référence RS pour le groupe GPⱼ. Dans l'exemple de la FIG. 2, le capteur de référence du groupe GP2 a pour identifiant « sn112 ».

Lors d'une étape E12, des données de mesure collectées par le capteur de référence RS, pour deux périodes temporelles distinctes, sont obtenues de la table de données historiques DHM pour le groupe GPⱼ. Les deux périodes temporelles sont consécutives ou non. Etant donné qu'il s'agit de détecter si les mesures du capteur de référence ont gardé ou non les mêmes propriétés statistiques, il peut être pertinent de considérer une première période temporelle récente ou courante, par exemple l'heure, le jour, la semaine ou le mois précédent et une deuxième période temporelle un peu plus ancienne, par exemple l'heure, le jour, la semaine ou le mois antérieur à la première période.

En E13, les mesures collectées par ledit capteur de référence RS pour les deux périodes temporelles sont comparées, en utilisant une métrique de distance donnée, par exemple celle spécifiée par le fichier de gouvernance GVP pour la détection d'une dérive des données (en anglais, « data drift ») en relation avec le groupe de capteur GPⱼ considéré. Dans l'exemple de la FIG. 2, pour le groupe GP₂, il s'agit de la métrique ou test de « Kolmogorov-Smirnov ». Ce test statistique, connu en soi, est utilisé pour quantifier une différence ou distance entre les fonctions de distribution de données du monde réel, comme en l'espèce, les séries temporelles de données d'un capteur sur deux périodes temporelles distinctes.

En E14, on détermine si la distance obtenue est supérieure à un seuil de dérive donné. Par exemple, ce seuil a été obtenu préalablement du fichier de gouvernance GVP. Dans l'exemple de la FIG.2, le seuil de dérive des données (dans l'exemple de la FIG.2, en anglais, « data_threshold ») est fixé à 0.3. Dans la négative, il est décidé qu'il n'y pas de dérive des données de mesure du capteur de référence RS et le processus s'arrête. Le dispositif 100 n'effectue aucune opération et attend de réexécuter une prochaine phase de supervision du modèle d'IA ou des données.

Au contraire, lorsque la distance entre les mesures comparées est supérieure au seuil de dérive, un nouveau capteur de référence RS' est sélectionné pour ledit groupe, lors d'une nouvelle exécution de l'étape E6 déjà décrite. Le nouveau capteur de référence RS' sélectionné est celui associé à la plus faible distance calculée à l'aide de la métrique précédente. Ensuite, le modèle MDⱼ est réentraîné, puis testé lors d'une nouvelle exécution de l'étape E7 déjà décrite en relation avec la FIG.3, à partir d'un jeu de données d'apprentissage et d'un jeu de test comprenant chacune une partie des données historiques de mesure stockées pour le nouveau capteur de référence RS'. A cet égard, il convient de noter que lors de la constitution de ces jeux d'apprentissage et de test, il est préalablement vérifié que les données de mesure extraites de la table de données DHM (notamment pour la période temporelle la plus récente) n'ont pas déjà été intégrées au jeu d'évaluation pour éviter d'introduire un biais dans les jeux d'entraînement (apprentissage et test) et d'évaluation.

Lors d'une étape E15, il est recherché un autre groupe parmi les N groupes de capteurs auquel assigner ledit capteur de référence RS qui vient d'être remplacé. Le choix du groupe de capteurs le plus adapté se fait en fonction d'une similarité des données historiques de mesure stockées en mémoire pour ce capteur et celles des capteurs de référence des autres groupes.de capteurs. Pour ce faire, la métrique utilisée est celle spécifiée dans le fichier de gouvernance pour chacun des autres groupes considérés. Par exemple, pour le groupe GP₁, il s'agit de la distance euclidienne. A ce stade, au moins les deux cas suivants sont envisagés :
- 1. Les données de mesure du capteur sont suffisamment similaires à celles d'un capteur de référence d'un autre groupe, selon un test effectué en E16 conformément au seuil de similarité « simi_threshold » indiqué dans le fichier de gouvernance GVP) et le changement de groupe est exécuté,
- 2. Au contraire, il n'est pas trouvé de groupe de capteurs dont le capteur de référence est suffisamment proche. Dans ce cas, un nouveau groupe GP_{N+1} est créé pour lui en E16. Un nouveau modèle d'IA MD_{N+1} lui est affecté, dont l'entraînement par le module TRN est déclenché en E18. Une fois l'entraînement terminé, le nouveau modèle MD_{N+1} est évalué en E8 puis déployé en E9 (mis en production) dans l'environnement ENV comme précédemment décrit.

Pour ce nouveau modèle MD_{N+1}, on suppose qu'aucun jeu d'évaluation n'a été constitué en amont. Dans ce cas, il est envisagé d'utiliser le jeu d'évaluation utilisé précédemment pour le groupe GPⱼ dont est issue l'ancien capteur de référence RS, qu'on enrichit avec au moins une partie des mesures du capteur de référence RS pour lesquelles une dérive des données a été détectée en E14. Au cours de l'évaluation en E8, un score de performance du nouveau modèle MD_{N+1} est comparé à un score de performance du modèle MDi du groupe GPⱼ auquel le capteur de référence RS était précédemment rattaché. Il est ensuite décidé que le modèle MD_{N+1} a réussi l'évaluation dès lors que son score de performance est au moins égal à celui du modèle MDᵢ. Ceci permet de garantir que la création du nouveau groupe GP_{N+1} n'a pas d'incidence négative sur les performances du système.

Dans les deux cas, les étapes E10 de génération et transmission d'un rapport d'événement LOG et E11 de mise à jour du fichier de gouvernance GVP sont déclenchées. Dans le premier cas, cette mise à jour comprend au moins la mise à jour des données d'informations relatives au groupe GPⱼ qui a fait l'objet de la supervision : nouvel identifiant de capteur de référence RS', et nouvelle version du modèle d'IA.

En outre, une mise à jour des informations relatives au groupe de capteurs auquel l'ancien capteur de référence RS a été intégré, est effectuée, comprenant un ajout de l'identifiant de ce capteur supplémentaire.

Dans le deuxième cas, il convient d'ajouter les informations et paramètres opérationnels associés au nouveau groupe GP_{N+1} parmi lesquelles l'identifiant de l'ancien capteur de référence RS qui est de fait le capteur de référence de ce nouveau groupe, l'identifiant du nouveau modèle d'IA MD_{N+1} et le chemin vers le nouveau jeu d'évaluation associé à ce nouveau groupe. Par exemple, ce jeu d'évaluation est formé automatiquement à partir d'une partie de l'historique des données de mesure du capteur RS, qui n'a pas été utilisée pour constituer les jeux d'apprentissage et de test.

Les étapes qui viennent d'être décrites réalisent une phase de supervision des données de mesures collectées par le capteur de référence d'un groupe de capteurs placés dans l'environnement ENV. Elles contribuent à détecter une éventuelle dérive, par exemple due à l'occurrence d'un nouveau comportement de l'environnement ENV, par exemple en présence d'un nouveau phénomène climatique ou autre.

En relation avec la FIG.5, on détaille maintenant la prise en compte d'un nouveau capteur de données S_{M+1} selon encore un autre mode de réalisation. On suppose qu'il a été ajouté à la flotte de capteurs de données déployée dans l'environnement ENV.

Lors d'une étape E19, des informations relatives à l'ajout du capteur de données supplémentaire S_{M+1} dans l'environnement ENV sont obtenues. Le dispositif 100 peut obtenir ces informations de différentes manières. Par exemple, il reçoit une notification en provenance du module de contrôle ou de l'orchestrateur du système PTF. Une telle notification comprend au moins un identifiant du capteur S_{M+1} ajouté. Elle peut aussi comprendre un lien vers des données historiques de mesures collectées par ce capteur S_{M+1} qui ont été enregistrées dans la table de données DHM stockée dans l'entrepôt de données. En alternative, le dispositif 100 peut être configuré pour aller régulièrement lire un registre de données dans lequel des informations relatives à la flotte de capteurs de l'environnement ENV sont stockées, détecter cet ajout et obtenir les informations associées dont il aura besoin pour exécuter les opérations de supervision des modèles d'IA mis en production dans l'environnement ENV.

Lors d'une étape E20, il est vérifié à partir des informations obtenues, que l'historique de données de mesure associé au capteur supplémentaire S_{M+1} comprend suffisamment de données pour être intégré au système PTF, à partir d'une ou plusieurs conditions spécifiées dans le fichier de gouvernance GVP. Elles sont par exemple stockées dans la rubrique « data_acquisition ». Sur la FIG.2, par exemple, pour le groupe GP₁, la condition requise est de disposer de trois années de données historiques de mesure. Bien sûr, d'autres conditions, par exemple de volume, de fréquence, etc. peuvent être prises en considération pour décider d'intégrer ou non le capteur supplémentaire.

En E21, si la condition n'est pas remplie, le capteur supplémentaire n'est pas intégré à un groupe de capteurs géré par le système PTF et le processus s'arrête. Optionnellement, un rapport d'événement LOG est généré en E10 et mis à disposition d'un analyste U2. De la sorte, il sera informé que les données de mesure de ce capteur S_{M+1} ne seront pas utilisées pour prédire l'évolution du fonctionnement de l'environnement ENV et prédire d'éventuels dysfonctionnements. Ce rapport d'événement peut aussi indiquer la raison du rejet du capteur S_{M+1}

Au contraire, si la condition est remplie en E21, une nouvelle exécution de l'étape E15, déjà décrite, est déclenchée, au cours de laquelle il est déterminé si le capteur supplémentaire S_{M+1} peut ou non être assigné à un groupe de capteurs existant GP₁ à GP_{N}. Pour ce faire, des données historiques de mesure associées à ce capteur de données supplémentaires S_{M+1} sont obtenues de la table de données DHM stockée dans l'entrepôt DWH.

Puis, les données historiques de mesure obtenues sont comparées respectivement à celles des capteurs de référence de la pluralité de groupes de capteurs GP₁ à GP_{N} actuellement en production dans l'environnement. Comme précédemment décrit, la mesure de similarité utilisée pour effectuer cette comparaison est celle spécifiée en mémoire pour chaque groupe, par exemple, dans le fichier de gouvernance GVP. On suppose par exemple que le capteur S_{M+1} est affecté au groupe pour lequel la mesure de similarité est la plus grande, respectivement la différence est la plus faible, tout en respectant la condition liée au seuil spécifié dans le fichier de gouvernance GVP.

En E16, si un groupe a été trouvé, on passe à l'étape E10 de génération d'un rapport d'événement LOG. Sinon, l'étape E17 de création d'un groupe supplémentaire GP_{N+1} est mise en œuvre. Dans ce cas, le capteur S_{M+1} est le seul membre du groupe et devient automatiquement son capteur de référence.

En E18, l'entraînement d'un nouveau modèle d'AI MD_{N+1} est déclenché au niveau du module TRN à l'aide de jeux d'apprentissage et de test constitués d'une partie de l'historique de données de mesure du nouveau capteur S_{M+1}. Une fois l'entraînement terminé, le nouveau modèle d'IA est évalué en E8 à l'aide d'un jeu d'évaluation, qui, selon un ou plusieurs exemples de réalisation, peut être constitué d'une autre partie de l'historique de données de mesure du nouveau capteur S_{M+1}.

En E9, le nouveau modèle d'IA est déployé dans l'environnement réel ENV.

Un rapport d'événement LOG est généré en E10. Enfin, une mise à jour du fichier de gouvernance GVP est déclenchée en E11 au niveau de l'agent de mise à jour UPD. Cette mise à jour consiste notamment à spécifier les informations relatives à l'ajout du capteur supplémentaire dans un groupe existant ou à l'ajout d'un nouveau groupe comprenant le capteur supplémentaire.

Les étapes qui viennent d'être décrites réalisent la prise en compte d'un capteur de données supplémentaire pour la supervision de l'environnement ENV. Elles contribuent à déterminer si le capteur en question dispose d'un historique de données satisfaisant des conditions prédéterminées suffisantes, notamment d'ancienneté, pour être pris en compte et s'il peut être intégré dans un groupe de capteurs existant, un nouveau groupe étant créé spécialement pour lui si besoin. De la sorte, l'évolution des moyens déployés pour la supervision de l'environnement ENV est pris en compte pour maintenir le système PTF de gestion de modèles d'IA à jour.

Chaque fonction, bloc, étape décrit peut être mis en œuvre dans du matériel, des logiciels, des microprogrammes, des intergiciels, des microcodes ou toute combinaison appropriée de ceux-ci. S'ils sont mis en œuvre dans un logiciel, les fonctions ou blocs des schémas fonctionnels et des organigrammes peuvent être mis en œuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable, créent les moyens de mettre en œuvre les fonctions décrites dans la présente description.

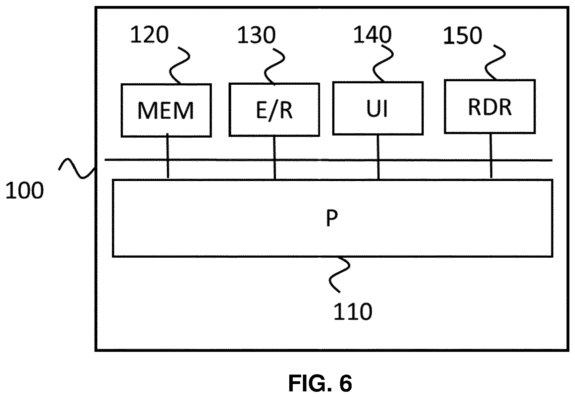

La FIG. 6 illustre un exemple de structure matérielle d'un dispositif 100 de gestion de modèles d'intelligence artificielle préalablement entraînés à prédire des mesures de capteurs de données pour une période temporelle suivante, à partir de données de mesure collectées pour une période temporelle précédente, selon un ou plusieurs modes de réalisation. Dans cet exemple, le dispositif 100 est configuré pour mettre en œuvre toutes les étapes du procédé décrit dans le présent document. En variante, il pourrait aussi mettre en œuvre une partie seulement de ces étapes.

En relation avec la FIG. 6, le dispositif 100 comprend au moins un processeur 110 et au moins une mémoire 120. Le dispositif 100 peut aussi comprendre une ou plusieurs interfaces de communication. Dans cet exemple, le dispositif 100 comprend des interfaces réseau 130 (par exemple, des interfaces réseau pour l'accès à un réseau câblé / sans fil, y compris une interface Ethernet, une interface WIFI, etc.) connectées au processeur 110 et configurées pour communiquer via un ou plusieurs liens de communication câblés / non câblés et des interfaces utilisateur 140 (par exemple, un clavier, une souris, un écran d'affichage, etc.) connectées au processeur. Le dispositif 100 peut également comprendre un ou plusieurs lecteurs de support 150 pour lire un support de stockage lisible par ordinateur (par exemple, un disque de stockage numérique (CD-ROM, DVD, Blue Ray, etc.), une clé USB, etc.). Le processeur 110 est connecté à chacun des autres composants précités afin d'en commander le fonctionnement.

La mémoire 120 peut comprendre une mémoire vive (RAM), une mémoire cache, une mémoire non volatile, une mémoire de sauvegarde (par exemple, des mémoires programmables ou flash), une mémoire morte (ROM), un disque dur (HDD), un lecteur à état solide (SSD) ou toute combinaison de ceux-ci. La ROM de la mémoire 120 peut être configurée pour stocker, entre autres, un système d'exploitation du dispositif 100 et/ou un ou plusieurs codes de programmes informatiques d'une ou plusieurs applications logicielles. La RAM de la mémoire 120 peut être utilisée par le processeur 110 pour le stockage temporaire de données.

Le processeur 110 peut être configuré pour stocker, lire, charger, exécuter et/ou traiter autrement des instructions stockées dans un support de stockage lisible par ordinateur et/ou dans la mémoire 120 de sorte que, lorsque les instructions sont exécutées par le processeur, le dispositif 100 exécute une ou plusieurs ou toutes les étapes du procédé de gestion, décrit dans le présent document. Des moyens mettant en œuvre une fonction ou un ensemble de fonctions peuvent correspondre dans ce document à un composant logiciel, à un composant matériel ou bien à une combinaison de composants matériels et/ou logiciels, apte à mettre en oeuvre la fonction ou l'ensemble de fonctions, selon ce qui est décrit ci-dessous pour les moyens concernés.

La présente description concerne aussi un support d'informations lisible par un processeur de données, et comportant des instructions d'un programme tel que mentionné ci-dessus.

Le support d'informations peut être n'importe quel moyen matériel, entité ou appareil, capable de stocker les instructions d'un programme tel que mentionné ci-dessus. Les supports de stockage de programme utilisables incluent les mémoires ROM ou RAM, les supports de stockage magnétiques tels que des disques magnétiques et des bandes magnétiques, les disques durs ou des supports de stockage de données numériques à lecture optique, ou toute combinaison de ces supports.

Dans certains cas, le support de stockage lisible par ordinateur n'est pas transitoire. Dans d'autres cas, le support d'informations peut être un support transitoire (par exemple, une onde porteuse) pour la transmission d'un signal (signal électromagnétique, électrique, radio ou optique) porteur des instructions de programme. Ce signal peut être acheminé via un moyen de transmission approprié, filaire ou non filaire : câble électrique ou optique, liaison radio ou infrarouge, ou par d'autres moyens.

Un mode de réalisation concerne également un produit programme d'ordinateur comprenant un support de stockage lisible par ordinateur sur lequel sont stockées des instructions de programme, les instructions de programme étant configurées pour causer la mise en œuvre par le dispositif hôte (par exemple un ordinateur) de tout ou partie des étapes du procédé décrit ici lorsque les instructions de programme sont exécutées par un ou plusieurs processeurs et/ou un ou plusieurs composants matériels programmables du dispositif hôte.

Les modes de réalisations qui viennent d'être présentés, ainsi que leurs variantes, présentent chacun de nombreux avantages

Les système, dispositif et procédé qui viennent d'être décrits permettent de superviser automatiquement le fonctionnement de modèles d'intelligence artificielle préalablement entraînés et mis en production pour prédire chacun l'évolution des mesures d'un groupe de capteurs parmi une pluralité de capteurs de données déployée dans un environnement réel, par exemple une installation industrielle, en vue de prévenir d'éventuels dysfonctionnements de cet environnement. Les modes de réalisation qui ont été présentés permettent de vérifier le niveau de performance des modèles d'IA mis en production, de les réentraîner dès que nécessaire pour maintenir des performances optimales au cours du temps.

Ils permettent aussi de superviser la pluralité de capteurs de données déployées dans l'environnement, notamment de détecter un changement des propriétés statistiques des mesures qu'ils collectent et de les réaffecter dynamiquement à un autre groupe de capteurs dont ils seraient devenus plus proches. Ils permettent également d'intégrer un nouveau capteur de données au système.

Ils permettent enfin une mise à jour dynamique du système grâce à la mise à jour d'un fichier informatique de gouvernance créé pour spécifier les groupes de capteurs et leur modèle d'IA associé, les tables de données comprenant l'historique de données de mesures collectées par les capteurs et celles comprenant l'historique de prédictions des mesures produites par les modèles d'IA, et/ou les paramètres opérationnels que le système doit utiliser pour fonctionner. Ainsi, les ajouts d'un capteur, d'un groupe de capteurs, d'un modèle d'IA ou d'une version de ce modèle, les changements de conditions et règles à appliquer, etc. sont répercutés dans le système, sans nécessité d'en modifier le code source applicatif. Un autre avantage est un gain de temps considérable et une réactivité accrue.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

## Revendications

1. Procédé mis en œuvre par ordinateur de gestion de modèles d'intelligence artificielle (MD₁, MD₂ ... MD_{N}) préalablement entraînés à prédire une évolution de mesures d'une pluralité de capteurs de données et déployés dans un environnement industriel (ENV) pour en surveiller le fonctionnement, la pluralité de capteurs de données étant répartie en plusieurs groupes, les capteurs d'un dit groupe étant configurés pour mesurer une même grandeur physique donnée parmi au moins un niveau d'eau, une pression, une température et une profondeur, undit modèle d'intelligence artificielle étant déployé dans l'environnement industriel en association avec un dit groupe de capteurs, ledit procédé comportant les étapes, mises en œuvre au sein d'un système informatique (PTF), de :
- obtenir (E2) des mesures collectées pendant une période temporelle donnée par un capteur de référence (RS) d'un dit groupe (GPᵢ) de capteurs de données d'une pluralité de capteurs placée dans l'environnement industriel (ENV),
- comparer (E4) des prédictions de mesures dudit capteur de référence pour la période temporelle donnée, produites par undit modèle d'intelligence artificielle (MDᵢ) associé audit groupe (GPᵢ) de capteurs, avec les mesures obtenues pour ledit capteur de référence, à l'aide d'une première métrique de distance ;
- lorsque (E5) la distance obtenue est supérieure à un premier seuil donné, sélectionner (E6) un nouveau capteur de référence (RS') pour ledit groupe parmi les autres capteurs du groupe, le nouveau capteur de référence sélectionné étant associé à une plus petite distance entre les prédictions du modèle d'intelligence artificielle et les mesures collectées pour la période temporelle donnée,
- réentraîner (E7) ledit modèle d'intelligence artificielle à partir d'au moins un jeu d'apprentissage formé à partir de données d'un historique de données de mesure du nouveau capteur de référence stockées dans une table de données de mesures (DHM) et d'un historique de prédictions de mesure stocké dans une table de données de prédiction (DHP),
- évaluer (E8) ledit modèle d'intelligence artificielle réentraîné à l'aide d'un jeu d'évaluation comprenant au moins une partie desdites mesures obtenues, pour lesquelles la distance obtenue est supérieure audit premier seuil donné, l'évaluation comprenant les sous-étapes de :
- déterminer un score de performance du modèle d'intelligence artificielle (MDᵢ) réentraîné avec le jeu d'évaluation,
- comparer le score de performance avec un score de performance obtenu par le modèle d'intelligence artificielle (MDᵢ) avant réentraînement, et
- décider que l'évaluation est réussie, lorsque le score de performance du modèle réentraîné est supérieur ou égal à celui de la version précédente; et
- en cas d'évaluation réussie, mettre à disposition (E9) ledit modèle d'intelligence artificielle réentraîné (MD_{N+1}) en vue d'un déploiement dans l'environnement industriel (ENV) pour remplacer le modèle d'intelligence artificielle associé audit groupe (GPi).

2. Procédé selon la revendication 1, comprenant en outre les étapes de :
- obtenir (E12) de la table de données de mesure (DHM) des mesures collectées par le capteur de référence d'undit groupe de capteurs de données (GPᵢ) de ladite pluralité, pour une première et une deuxième périodes temporelles distinctes, ;
- comparer (E13) les mesures collectées par ledit capteur de référence pour les première et deuxième périodes temporelles à l'aide d'une deuxième métrique de distance ;
- lorsque (E14) la distance obtenue est supérieure à un deuxième seuil donné, sélectionner (E6) un nouveau capteur de référence (RS') pour ledit groupe, le nouveau capteur de référence sélectionné étant associé à une plus petite distance entre les mesures collectées pour les première et deuxième périodes temporelles,
- réentraîner (E7) ledit modèle à partir d'au moins un jeu d'apprentissage comprenant au moins une partie des données d'un historique de données de mesure collectées par le nouveau capteur de référence stocké dans ladite table de données de mesures (DHM) et changer ledit capteur de référence de groupe,
- rechercher (E15) un autre groupe de capteurs auquel assigner ledit capteur de référence (RS), en fonction d'une distance entre des données collectées par un capteur de référence associé audit autre groupe et celles collectées par ledit capteur de référence (RS), et lorsque ladite distance est inférieure à un troisième seuil donné, assigner (E16) ledit capteur de référence audit autre groupe.

3. Procédé selon la revendication précédente, comprenant les étapes de ;
- lorsque ladite distance est supérieure ou égale audit troisième seuil donné, créer (E17) un nouveau groupe de capteurs de données (GP_{N+1}) comprenant ledit capteur de référence, et entraîner (E18) un nouveau modèle d'intelligence artificielle (MD_{N+1}) associé au nouveau groupe de capteurs à partir d'au moins un jeu d'apprentissage comprenant au moins une partie des données d'un historique de données de mesure collectées par le capteur de référence (RS), stocké dans ladite table de données de mesures (DHM),
- une fois ledit nouveau modèle de prédiction entraîné, évaluer (E8) le nouveau modèle d'intelligence artificielle (MDₙ₊₁) à l'aide d'un jeu d'évaluation comprenant au moins une partie desdites mesures obtenues, pour lesquelles la distance obtenue est supérieure audit deuxième seuil donné ;
- en cas d'évaluation réussie, déployer (E9) ledit nouveau modèle d'intelligence artificielle (MDₙ₊₁) dans l'environnement (ENV).

4. Procédé selon la revendication précédente, selon lequel l'évaluation du nouveau modèle d'intelligence artificielle comprend les sous-étapes de :
- déterminer un score de performance du nouveau modèle d'intelligence artificielle (MDₙ₊₁) pour le jeu d'évaluation,
- comparer le score de performance avec un score de performance du modèle d'intelligence artificielle (MDᵢ) dudit groupe (GPᵢ), et
- décider que l'évaluation est réussie, lorsque le score de performance du nouveau modèle d'intelligence artificielle (MD_{N+1}) est supérieur ou égal à celui dudit modèle d'intelligence artificielle (MDᵢ).

5. Procédé selon l'une quelconque des revendications précédentes, comprenant les étapes de :
- obtenir (E19) des informations relatives à un ajout d'un nouveau capteur de données (S_{M+1}) dans ledit environnement réel (ENV), comprenant un historique de mesures collectées par ledit capteur,
- rechercher (E15) un groupe de capteurs parmi lesdits groupes auquel assigner le nouveau capteur de données (S_{M+1}), en fonction d'une distance entre des données collectées par un capteur de référence associé à undit groupe et celles collectées par ledit nouveau capteur,
- lorsque ladite distance est inférieure à un troisième seuil donné, assigner (E16) ledit nouveau capteur (S_{M+1}) audit groupe et,
- lorsque ladite distance est supérieure ou égale audit troisième seuil donné, créer (E17) un nouveau groupe de capteurs de données (GP_{N+1}) comprenant ledit nouveau capteur comme capteur de référence,
- entraîner (E18) un nouveau modèle d'intelligence artificielle (MDₙ₊₁) associé au nouveau groupe de capteurs.
- une fois ledit nouveau modèle de prédiction entraîné, évaluer (E8) le nouveau modèle d'intelligence artificielle à l'aide d'un jeu d'évaluation comprenant au moins une partie desdites mesures obtenues, pour lesquelles la distance obtenue est supérieure audit deuxième seuil donné ;
- en cas d'évaluation réussie, déployer (E9) ledit nouveau modèle d'intelligence artificielle (MDₙ₊₁) dans l'environnement (ENV).

6. Procédé selon l'une quelconque des revendications précédentes, comportant une étape de lire (E0) un fichier informatique de gouvernance (GVP), stocké en mémoire (MEM), décrivant pour lesdits groupes de capteurs, les modèles d'intelligence artificielle associées auxdits groupes, le capteur de référence et des paramètres opérationnels de contrôle d'opérations exécutées lors de la mise en oeuvre desdites étapes.

7. Procédé selon la revendication 6, dans lequel le procédé comprend l'étape de :
- mettre à jour (E11) le fichier informatique de gouvernance lorsque des changements ont été apportés auxdits groupes de capteurs.

8. Procédé selon l'une quelconque des revendications précédentes, dans lequel le procédé comprend l'étape de générer (E10) un rapport d'événement (LOG) comprenant des informations relatives à des opérations exécutées lors de la mise en œuvre desdites étapes et de le mettre à disposition.

9. Dispositif (100) de gestion de modèles d'intelligence artificielle (MD₁, MD₂...MD_{N}) préalablement entraînés à prédire une évolution de mesures de capteurs de données et déployés dans un environnement industriel (ENV) pour en surveiller le fonctionnement, la pluralité de capteurs de données étant répartie en plusieurs groupes, les capteurs d'un dit groupe étant configurés pour mesurer une même grandeur physique donnée parmi,au moins un niveau d'eau, une pression, une température et une profondeur, undit modèle d'intelligence artificielle étant déployé dans l'environnement industriel en association avec un dit groupe de capteurs, ledit dispositif étant configuré pour, au sein d'un système informatique (PTF):
- obtenir des mesures collectées pendant une période temporelle donnée par un capteur de référence (RS) d'un groupe (GPᵢ) de capteurs de données d'une pluralité de capteurs placée dans l'environnement industriel (ENV),
- comparer des prédictions de mesures dudit capteur de référence pour la période temporelle donnée, produites par undit modèle d'intelligence artificielle (MDᵢ) associé audit groupe (GPᵢ) de capteurs, avec les mesures obtenues pour ledit capteur de référence, à l'aide d'une première métrique de distance,
- lorsque la distance obtenue est supérieure à un premier seuil donné, sélectionner (E6) un nouveau capteur de référence (RS') pour ledit groupe parmi les autres capteurs du groupe, le nouveau capteur de référence sélectionné étant associé à une plus petite distance entre les prédictions du modèle d'intelligence artificielle et les mesures collectées pour la période temporelle donnée,
- réentraîner ledit modèle d'intelligence artificielle à partir d'au moins un jeu d'apprentissage formé à partir de données d'un historique de données de mesure du nouveau capteur de référence stockées dans une table de données de mesures (DHM) et d'un historique de prédictions de mesure stocké dans une table de données de prédiction (DHP),
- évaluer ledit modèle d'intelligence artificielle réentraîné à l'aide d'un jeu d'évaluation comprenant au moins une partie desdites mesures obtenues, pour lesquelles la distance obtenue est supérieure audit premier seuil donné, l'évaluation comprenant:
- déterminer un score de performance du modèle d'intelligence artificielle (MDᵢ) réentraîné avec le jeu d'évaluation,
- comparer le score de performance avec un score de performance obtenu par le modèle d'intelligence artificielle (MDᵢ) avant réentraînement, et
- décider que l'évaluation est réussie, lorsque le score de performance du modèle réentraîné est supérieur ou égal à celui de la version précédente; et
- en cas d'évaluation réussie, mettre à disposition (E9) ledit modèle d'intelligence artificielle réentraîné (MD_{N+1}) en vue d'un déploiement dans l'environnement industriel (ENV) pour remplacer le modèle d'intelligence artificiel associé audit groupe de capteurs.

10. Dispositif (100) selon la revendication précédente, comprenant :
- au moins un processeur ; et
- au moins une mémoire comprenant un code de programme informatique, la au moins une mémoire et le code de programme informatique étant configurés pour, avec l'au moins un processeur, provoquer l'exécution dudit dispositif.

11. Système informatique (PTF) de gestion de modèles de prédiction comprenant :
- le dispositif (100) selon l'une des revendications 9 et 10,
- au moins un registre de données (RGY) stockant des modèles d'intelligence artificielle (MD₁ -MD_{N}) préalablement entraînés à prédire des mesures de capteurs de données pour une période temporelle suivante, à partir de données collectées pour une période temporelle précédente,
- au moins un entrepôt de données (DWH) comprenant une table de données (DHM), comprenant un historique des données de mesure collectées par les capteurs de données et une table de données (DHP) comprenant un historique de prédictions de mesures des capteurs par lesdits modèles d'intelligence artificielle,
- au moins une mémoire (MEM) stockant un fichier informatique de gouvernance (GVP) décrivant les groupes de capteurs, et pour undit groupe de capteurs, le modèle de prédiction, la table de données de mesures (DHM) et des paramètres opérationnels de contrôle d'opérations exécutées par ledit dispositif.

12. Programme d'ordinateur comportant des instructions qui lorsqu'elles sont exécutées par un processeur mettent en œuvre le procédé selon l'une quelconque des revendications 1 à 8.

13. Support d'enregistrement non volatile et lisible par un ordinateur, sur lequel est enregistré le programme d'ordinateur selon la revendication précédente.

## Patentansprüche

1. Computerimplementiertes Verfahren zur Verwaltung von Modellen der künstlichen Intelligenz (MD₁, MD₂...MD_{N}), die dazu vortrainiert wurden, die Entwicklung von Messwerten einer Vielzahl von Datensensoren vorherzusagen, und die in einer industriellen Umgebung (ENV) eingesetzt werden, um deren Betrieb zu überwachen, wobei die Vielzahl von Datensensoren in mehrere Gruppen unterteilt ist, wobei die Sensoren einer Gruppe konfiguriert sind, um die gleiche gegebene physikalische Größe zu messen, die ausgewählt ist aus mindestens einem Wasserstand, einem Druck, einer Temperatur und einer Tiefe, wobei ein Modell der künstlichen Intelligenz in der industriellen Umgebung einer Sensorgruppe zugeordnet eingesetzt wird, wobei das Verfahren die folgenden Schritte, die innerhalb eines Computersystems (PTF) implementiert werden, beinhaltet:
- Erhalten (E2) von Messwerten, die während eines gegebenen Zeitraums von einem Referenzsensor (RS) einer Gruppe (GPᵢ) von Datensensoren aus einer Vielzahl von in der industriellen Umgebung (ENV) angeordneten Sensoren erfasst wurden,
- Vergleichen (E4) der Messvorhersagen des Referenzsensors für den gegebenen Zeitraum, die von einem Modell der künstlichen Intelligenz (MDᵢ), das der Sensorgruppe (GPᵢ) zugeordnet ist, erzeugt wurden, mit den für den Referenzsensor erhaltenen Messwerten mittels einer ersten Abstandsmetrik;
- wenn (E5) der erhaltene Abstand einen gegebenen ersten Schwellenwert überschreitet, Auswählen (E6) eines neuen Referenzsensors (RS') für die Gruppe aus den anderen Sensoren der Gruppe, wobei dem ausgewählten neuen Referenzsensor ein geringerer Abstand zwischen den Vorhersagen des Modells der künstlichen Intelligenz und den für den gegebenen Zeitraum erfassten Messwerten zugeordnet ist,
- erneutes Trainieren (E7) des Modells der künstlichen Intelligenz anhand mindestens eines Trainingsdatensatzes, der aus Daten eines Messdatenverlaufs des neuen Referenzsensors, die in einer Messdatentabelle (DHM) gespeichert sind, sowie aus einem Verlauf von Messwertvorhersagen, die in einer Vorhersagedatentabelle (DHP) gespeichert sind, gebildet wird,
- Bewerten (E8) des neu trainierten Modells der künstlichen Intelligenz mittels eines Bewertungsdatensatzes, der mindestens einen Teil der erhaltenen Messwerte umfasst, für die der erhaltene Abstand größer ist als der gegebene erste Schwellenwert, wobei das Bewerten die folgenden Teilschritte umfasst:
- Bestimmen einer Leistungspunktzahl für das Modell der künstlichen Intelligenz (MDᵢ), das mit dem Bewertungsdatensatz neu trainiert wurde,
- Vergleichen der Leistungspunktzahl mit einer Leistungspunktzahl, die das Modell der künstlichen Intelligenz (MDᵢ) vor dem erneuten Trainieren erhalten hat, und
- Entscheiden, dass die Bewertung erfolgreich ist, wenn die Leistungspunktzahl des neu trainierten Modells höher als oder gleich der Punktzahl der vorherigen Version ist; und
- im Falle einer erfolgreichen Bewertung Bereitstellen (E9) des neu trainierten Modells der künstlichen Intelligenz (MD_{N+1}) im Hinblick auf dessen Einsatz in der industriellen Umgebung (ENV) als Ersatz für das der Gruppe (GPᵢ) zugeordnete Modell der künstlichen Intelligenz.

2. Verfahren nach Anspruch 1, ferner umfassend die Schritte:
- Erhalten (E12) von Messwerten, die durch den Referenzsensor einer der Datensensorgruppen (GPᵢ) aus der Vielzahl in einem ersten und einem zweiten Zeitraum, die von einander verschieden sind, erfasst wurden, aus der Messdatentabelle (DHM);
- Vergleichen (E13) der von dem Referenzsensor in dem ersten und dem zweiten Zeitraum erfassten Messwerte mittels einer zweiten Abstandsmetrik;
- wenn (E14) der erhaltene Abstand größer als ein gegebener zweiter Schwellenwert ist, Auswählen (E6) eines neuen Referenzsensors (RS') für die Gruppe, wobei dem ausgewählten neuen Referenzsensor ein geringerer Abstand zwischen den in dem ersten und dem zweiten Zeitraum erfassten Messwerten zugeordnet ist,
- erneutes Trainieren (E7) des Modells anhand mindestens eines Trainingsdatensatzes, der mindestens einen Teil der Daten aus einem Verlauf von Messdaten umfasst, die von dem neuen Referenzsensor erfasst wurden und in der Messdatentabelle (DHM) gespeichert sind, und Ändern des Referenzsensors der Gruppe,
- Suchen (E15) einer anderen Sensorgruppe, der der Referenzsensor (RS) zugewiesen werden soll, in Abhängigkeit von einem Abstand zwischen den von einem der anderen Gruppe zugeordneten Referenzsensor erfassten Daten und den vom Referenzsensor (RS) erfassten Daten, und, wenn dieser Abstand geringer als ein gegebener dritter Schwellenwert ist, Zuweisen (E16) des Referenzsensors zu der anderen Gruppe.

3. Verfahren nach dem vorstehenden Anspruch, umfassend die Schritte:
- wenn der Abstand größer oder gleich dem gegebenen dritten Schwellenwert ist, Erstellen (E17) einer neuen Datensensorgruppe (GP_{N+1}), die den Referenzsensor umfasst, und Trainieren (E18) eines neuen Modells der künstlichen Intelligenz (MD_{N+1}), das der neuen Sensorgruppe zugeordnet ist, anhand mindestens eines Trainingsdatensatzes, der mindestens einen Teil der Daten aus einem Verlauf von Messdaten umfasst, die vom Referenzsensor (RS) erfasst wurden und in der Messdatentabelle (DHM) gespeichert sind,
- nachdem das neue Vorhersagemodell trainiert wurde, Bewerten (E8) des neuen Modells der künstlichen Intelligenz (MD_{N+1}) mittels eines Bewertungsdatensatzes, der mindestens einen Teil der erhaltenen Messwerte, bei denen der erhaltene Abstand größer ist als der gegebene zweite Schwellenwert, umfasst;
- im Falle einer erfolgreichen Bewertung Einsetzen (E9) des neuen Modells der künstlichen Intelligenz (MD_{N+1}) in der Umgebung (ENV).

4. Verfahren nach dem vorstehenden Anspruch, wobei das Bewerten des neuen Modells der künstlichen Intelligenz die folgenden Teilschritte umfasst:
- Bestimmen einer Leistungspunktzahl des neuen Modells der künstlichen Intelligenz (MD_{N+1}) für den Bewertungsdatensatz,
- Vergleichen der Leistungspunktzahl mit einer Leistungspunktzahl des Modells der künstlichen Intelligenz (MDᵢ) der Gruppe (GPᵢ) und
- Entscheiden, dass die Bewertung erfolgreich ist, wenn die Leistungspunktzahl des neuen Modells der künstlichen Intelligenz (MD_{N+1}) mindestens höher oder gleich der Punktzahl des Modells der künstlichen Intelligenz (MDᵢ) ist.

5. Verfahren nach einem der vorstehenden Ansprüche, umfassend die Schritte:
- Erhalten (E19) von Informationen bezüglich des Hinzufügens eines neuen Datensensors (S_{M+1}) in der realen Umgebung (ENV), umfassend einen Verlauf der vom Sensor erfassten Messwerte,
- Suchen (E15) einer Sensorgruppe aus den Gruppen, der der neue Datensensor (S_{M+1}) zugewiesen werden soll, in Abhängigkeit von einem Abstand zwischen den von einem dieser Gruppe zugeordneten Referenzsensor erfassten Daten und den vom neuen Sensor erfassten Daten,
- wenn der Abstand unter einem gegebenen dritten Schwellenwert liegt, Zuweisen (E16) des neuen Sensors (S_{M+1}) zu der Gruppe und,
- wenn der Abstand größer oder gleich dem gegebenen dritten Schwellenwert ist, Erstellen (E17) einer neuen Datensensorgruppe (GP_{N+1}), die den neuen Sensor als Referenzsensor umfasst,
- Trainieren (E18) eines neuen Modells der künstlichen Intelligenz (MD_{N+1}), das der neuen Sensorgruppe zugeordnet ist,
- nachdem das neue Vorhersagemodell trainiert wurde, Bewerten (E8) des neuen Modells der künstlichen Intelligenz mittels eines Bewertungsdatensatzes, der mindestens einen Teil der erhaltenen Messwerte, bei denen der erhaltene Abstand größer ist als der gegebene zweite Schwellenwert, umfasst;
- im Falle einer erfolgreichen Bewertung Einsetzen (E9) des neuen Modells der künstlichen Intelligenz (MD_{N+1}) in der Umgebung (ENV).

6. Verfahren nach einem der vorstehenden Ansprüche, mit einem Schritt des Lesens (E0) einer im Speicher (MEM) gespeicherten Governance-Computerdatei (GVP), die für die Sensorgruppen die den Gruppen zugeordneten Modelle der künstlichen Intelligenz, den Referenzsensor und Betriebsparameter zur Steuerung von Vorgängen, die bei der Durchführung der Schritte ausgeführt werden, beschreibt.

7. Verfahren nach Anspruch 6, wobei das Verfahren den folgenden Schritt umfasst:
- Aktualisieren (E11) der Governance-Computerdatei, wenn Änderungen an den Sensorgruppen vorgenommen wurden.

8. Verfahren nach einem der vorstehenden Ansprüche, wobei das Verfahren den Schritt des Generierens (E10) eines Ereignisprotokolls (LOG) umfasst, das Informationen über Vorgänge umfasst, die bei der Implementierung der Schritte ausgeführt wurden, und dessen Bereitstellung.

9. Vorrichtung (100) zur Verwaltung von Modellen der künstlichen Intelligenz (MD₁, MD₂...MD_{N}), die dazu vortrainiert wurden, die Entwicklung von Messwerten von Datensensoren vorherzusagen, und die in einer industriellen Umgebung (ENV) eingesetzt werden, um deren Betrieb zu überwachen, wobei die Vielzahl von Datensensoren in mehrere Gruppen unterteilt ist, wobei die Sensoren einer Gruppe konfiguriert sind, um die gleiche gegebene physikalische Größe zu messen, die ausgewählt ist aus mindestens einem Wasserstand, einem Druck, einer Temperatur und einer Tiefe, wobei ein Modell der künstlichen Intelligenz in der industriellen Umgebung einer solchen Sensorgruppe zugeordnet eingesetzt wird, wobei die Vorrichtung dazu konfiguriert ist, Folgendes innerhalb eines Computersystems (PTF) vorzunehmen:
- Erhalten von Messwerten, die während eines gegebenen Zeitraums von einem Referenzsensor (RS) einer Gruppe (GPᵢ) von Datensensoren aus einer in der industriellen Umgebung (ENV) angeordneten Vielzahl von Sensoren erfasst wurden,
- Vergleichen der Messvorhersagen des Referenzsensors für den gegebenen Zeitraum, die von einem Modell der künstlichen Intelligenz (MDᵢ), das der Sensorgruppe (GPᵢ) zugeordnet ist, erzeugt wurden, mit den für den Referenzsensor erhaltenen Messwerten mittels einer ersten Abstandsmetrik;
- wenn der erhaltene Abstand einen gegebenen ersten Schwellenwert überschreitet, Auswählen (E6) eines neuen Referenzsensors (RS') für die Gruppe aus den anderen Sensoren der Gruppe, wobei dem ausgewählten neuen Referenzsensor ein geringerer Abstand zwischen den Vorhersagen des Modells der künstlichen Intelligenz und den für den gegebenen Zeitraum erfassten Messwerten zugeordnet ist,
- erneutes Trainieren des Modells der künstlichen Intelligenz anhand mindestens eines Trainingsdatensatzes, der aus Daten eines Messdatenverlaufs des neuen Referenzsensors, die in einer Messdatentabelle (DHM) gespeichert sind, sowie aus einem Verlauf von Messvorhersagen, die in einer Vorhersagedatentabelle (DHP) gespeichert sind, gebildet wird,
- Bewerten des neu trainierten Modells der künstlichen Intelligenz mittels eines Bewertungsdatensatzes, der mindestens einen Teil der erhaltenen Messwerte umfasst, für die der erhaltene Abstand größer ist als der erste Schwellenwert, wobei das Bewerten Folgendes umfasst:
- Bestimmen einer Leistungspunktzahl für das Modell der künstlichen Intelligenz (MDᵢ), das mit dem Bewertungsdatensatz neu trainiert wurde,
- Vergleichen der Leistungspunktzahl mit einer Leistungspunktzahl, die das Modell der künstlichen Intelligenz (MDᵢ) vor dem erneuten Trainieren erhalten hat, und
- Entscheiden, dass die Bewertung erfolgreich ist, wenn die Leistungspunktzahl des neu trainierten Modells höher als oder gleich der Punktzahl der vorherigen Version ist; und
- im Falle einer erfolgreichen Bewertung Bereitstellen (E9) des neu trainierten Modells der künstlichen Intelligenz (MD_{N+1}) im Hinblick auf dessen Einsatz in der industriellen Umgebung (ENV) als Ersatz für das der Sensorgruppe zugeordnete Modell der künstlichen Intelligenz.

10. Vorrichtung (100) nach dem vorstehenden Anspruch, umfassend:
- mindestens einen Prozessor; und
- mindestens einen Speicher, der einen Computerprogrammcode umfasst, wobei der mindestens eine Speicher und der Computerprogrammcode konfiguriert sind, um gemeinsam mit dem mindestens einen Prozessor die Ausführung der Vorrichtung zu bewirken.

11. Computersystem (PTF) zur Verwaltung von Vorhersagemodellen, umfassend:
- die Vorrichtung (100) nach einem der Ansprüche 9 und 10,
- mindestens ein Datenregister (RGY), auf dem Modelle der künstlichen Intelligenz (MD₁ -MD_{N}) gespeichert sind, die dazu vortrainiert sind, anhand von Daten, die in einem vorangegangenen Zeitraum erfasst wurden, Messwerte von Datensensoren für einen nachfolgenden Zeitraum vorherzusagen,
- mindestens ein Data Warehouse (DWH), das eine Datentabelle (DHM), einen Verlauf von von den Datensensoren erfassten Messdaten und eine einen Verlauf der von den Modellen der künstlichen Intelligenz erstellten Vorhersagen der Sensormessungen umfassende Datentabelle (DHP) umfasst,
- mindestens einen Speicher (MEM), auf dem eine Governance-Datei (GVP) gespeichert ist, die die Sensorengruppen und für eine Sensorengruppe das Vorhersagemodell, die Messdatentabelle (DHM) und die Betriebsparameter zur Steuerung der von der Vorrichtung ausgeführten Vorgänge beschreibt.

12. Computerprogramm, das Anweisungen umfasst, die, wenn sie von einem Prozessor ausgeführt werden, das Verfahren nach einem der Ansprüche 1 bis 8 implementieren.

13. Nichtflüchtiger und computerlesbarer Datenträger, auf dem das Computerprogramm nach dem vorstehenden Anspruch abgelegt ist.

## Claims

1. Computer-implemented method for managing artificial intelligence models (MD₁, MD₂...MD_{N}) previously trained to predict an evolution of measurements from a plurality of data sensors and deployed in an industrial environment (ENV) in order to monitor the operation thereof, the plurality of data sensors being divided into multiple groups, the sensors of one said group being configured to measure a single given physical variable from at least a water level, a pressure, a temperature, and a depth, one said artificial intelligence model being deployed in the industrial environment in association with one said group of sensors, said method having the steps, implemented within a computer system (PTF), of:
- obtaining (E2) measurements collected during a given time period by a reference sensor (RS) of one said group (GPᵢ) of data sensors of a plurality of sensors placed in the industrial environment (ENV),
- comparing (E4) predictions, produced by one said artificial intelligence model (MDᵢ) associated with said group (GPᵢ) of sensors, of measurements from said reference sensor for the given time period against the measurements obtained for said reference sensor, using a first distance metric;
- when (E5) the obtained distance is greater than a first given threshold, selecting (E6) a new reference sensor (RS') for said group from the other sensors in the group, the new, selected reference sensor being associated with a smaller distance between the predictions of the artificial intelligence model and the measurements collected for the given time period,
- re-training (E7) said artificial intelligence model on the basis of at least one learning set formed on the basis of data from a history of measurement data from the new reference sensor that are stored in a measurement data table (DHM) and a measurement predictions history stored in a prediction data table (DHP),
- evaluating (E8) said re-trained artificial intelligence model using an evaluation set comprising at least some of said obtained measurements, for which the obtained distance is greater than said first given threshold, the evaluation comprising the sub-steps of:
- determining a performance score for the re-trained artificial intelligence model (MDᵢ) with the evaluation set,
- comparing the performance score against a performance score obtained by the artificial intelligence model (MDᵢ) before re-training, and
- deciding that the evaluation is successful when the performance score for the re-trained model is greater than or equal to that for the previous version; and
- in the event of a successful evaluation, making (E9) said re-trained artificial intelligence model (MD_{N+1}) available for deployment in the industrial environment (ENV) in order to replace the artificial intelligence model associated with said group (GPᵢ).

2. Method according to claim 1, further comprising the steps of:
- obtaining (E12), from the measurement data table (DHM), measurements collected by the reference sensor of one said group (GPᵢ) of data sensors of said plurality for a first and a second distinct time period;
- comparing (E13) the measurements collected by said reference sensor for the first and second time periods using a second distance metric;
- when (E14) the obtained distance is greater than a second given threshold, selecting (E6) a new reference sensor (RS') for said group, the new, selected reference sensor being associated with a smaller distance between the measurements collected for the first and second time periods,
- re-training (E7) said model on the basis of at least one learning set comprising at least some of the data from a history, stored in said measurement data table (DHM), of measurement data collected by the new reference sensor, and changing said group reference sensor,
- searching (E15) for another group of sensors to which to assign said reference sensor (RS) depending on a distance between data collected by a reference sensor associated with said other group and data collected by said reference sensor (RS), and when said distance is less than a third given threshold, assigning (E16) said reference sensor to said other group.

3. Method according to the preceding claim, comprising the steps of;
- when said distance is greater than or equal to said third given threshold, creating (E17) a new group (GP_{N+1}) of data sensors comprising said reference sensor, and training (E18) a new artificial intelligence model (MD_{N+1}) associated with the new group of sensors on the basis of at least one learning set comprising at least some of the data from a history, stored in said measurement data table (DHM), of measurement data collected by the reference sensor (RS),
- once said new prediction model has been trained, evaluating (E8) the new artificial intelligence model (MD_{N+1}) using an evaluation set comprising at least some of said obtained measurements, for which the obtained distance is greater than said second given threshold;
- in the event of a successful evaluation, deploying (E9) said new artificial intelligence model (MD_{N+1}) in the environment (ENV).

4. Method according to the preceding claim, according to which the evaluation of the new artificial intelligence model comprises the sub-steps of:
- determining a performance score for the new artificial intelligence model (MD_{N+1}) for the evaluation set,
- comparing the performance score against a performance score for the artificial intelligence model (MDᵢ) of said group (GPᵢ), and
- deciding that the evaluation is successful when the performance score for the new artificial intelligence model (MD_{N+1}) is greater than or equal to that for said artificial intelligence model (MDᵢ).

5. Method according to any one of the preceding claims, comprising the steps of:
- obtaining (E19) information relating to an addition of a new data sensor (S_{M+1}) in said real environment (ENV) and comprising a history of measurements collected by said sensor,
- searching (E15) for a group of sensors from said groups, to which to assign the new data sensor (S_{M+1}) depending on a distance between data collected by a reference sensor associated with one said group and data collected by said new sensor,
- when said distance is less than a third given threshold, assigning (E16) said new sensor (S_{M+1}) to said group and,
- when said distance is greater than or equal to said third given threshold, creating (E17) a new group (GP^{N+1}) of data sensors comprising said new sensor as a reference sensor,
- training (E18) a new artificial intelligence model (MD_{N+1}) associated with the new group of sensors,
- once said new prediction model has been trained, evaluating (E8) the new artificial intelligence model using an evaluation set comprising at least some of said obtained measurements, for which the obtained distance is greater than said second given threshold;
- in the event of a successful evaluation, deploying (E9) said new artificial intelligence model (MD_{N+1}) in the environment (ENV).

6. Method according to any one of the preceding claims, having a step of reading (E0) a governance computer file (GVP), stored in memory (MEM), describing for said groups of sensors the artificial intelligence models associated with said groups, the reference sensor, and operational parameters for controlling operations performed during the implementation of said steps.

7. Method according to claim 6, wherein the method comprises the step of:
- updating (E11) the governance computer file when changes have been made to said groups of sensors.

8. Method according to any one of the preceding claims, wherein the method comprises the step of generating (E10) an event report (LOG) comprising information relating to operations performed during the implementation of said steps and making said report available.

9. Device (100) for managing artificial intelligence models (MD₁, MD₂...MD_{N}) previously trained to predict an evolution of measurements from data sensors and deployed in an industrial environment (ENV) in order to monitor the operation thereof, the plurality of data sensors being divided into multiple groups, the sensors of one said group being configured to measure a single given physical variable from at least a water level, a pressure, a temperature, and a depth, one said artificial intelligence model being deployed in the industrial environment in association with one said group of sensors, said device being configured to perform the following, within a computer system (PTF):
- obtaining measurements collected during a given time period by a reference sensor (RS) of a group (GPᵢ) of data sensors of a plurality of sensors placed in the industrial environment (ENV),
- comparing predictions, produced by one said artificial intelligence model (MDᵢ) associated with said group (GPᵢ) of sensors, of measurements from said reference sensor for the given time period against the measurements obtained for said reference sensor, using a first distance metric,
- when the obtained distance is greater than a first given threshold, selecting (E6) a new reference sensor (RS') for said group from the other sensors in the group, the new, selected reference sensor being associated with a smaller distance between the predictions of the artificial intelligence model and the measurements collected for the given time period,
- re-training said artificial intelligence model on the basis of at least one learning set formed on the basis of data from a history of measurement data from the new reference sensor that are stored in a measurement data table (DHM) and a measurement predictions history stored in a prediction data table (DHP),
- evaluating said re-trained artificial intelligence model using an evaluation set comprising at least some of said obtained measurements, for which the obtained distance is greater than said first given threshold, the evaluation comprising:
- determining a performance score for the re-trained artificial intelligence model (MDᵢ) with the evaluation set,
- comparing the performance score against a performance score obtained by the artificial intelligence model (MDᵢ) before re-training, and
- deciding that the evaluation is successful when the performance score for the re-trained model is greater than or equal to that of the previous version; and
- in the event of a successful evaluation, making (E9) said re-trained artificial intelligence model (MD_{N+1}) available for deployment in the industrial environment (ENV) in order to replace the artificial intelligence model associated with said group of sensors.

10. Device (100) according to the preceding claim, comprising:
- at least one processor; and
- at least one memory comprising computer program code, the at least one memory and the computer program code being configured to cause, together with the at least one processor, said device to be run.

11. Computer system (PTF) for managing prediction models, comprising:
- the device (100) according to either of claims 9 and 10,
- at least one data registry (RGY) storing artificial intelligence models (MD₁ - MD_{N}) previously trained to predict measurements from data sensors for a next time period on the basis of data collected for a previous time period,
- at least one data warehouse (DWH) comprising a data table (DHM) comprising a history of measurement data collected by the data sensors and a data table (DHP) comprising a history of predictions of measurements from the sensors by said artificial intelligence models,
- at least one memory (MEM) storing a governance computer file (GVP) describing the groups of sensors, and for one said group of sensors the prediction model, the measurement data table (DHM), and operational parameters for controlling operations performed by said device.

12. Computer program having instructions which, when they are executed by a processor, implement the method according to any one of claims 1 to 8.

13. Non-volatile, computer-readable recording medium on which the computer program according to the preceding claim is recorded.
